(19) **Europäisches Patentamt**

**European Patent Office**

**Office européen des brevets**

(11) **EP 1 149 747 A1**

(12) **EUROPEAN PATENT APPLICATION**

(43) Date of publication:
**31.10.2001 Bulletin 2001/44**

(51) Int Cl.7: **B60T 7/04**, B60T 7/12,
B60T 8/00, B60T 8/32,
B60T 8/40, B60T 8/44,
B60T 13/16

(21) Application number: **01109755.7**

(22) Date of filing: **20.04.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **21.04.2000 JP 2000120685**
**11.07.2000 JP 2000209772**
**18.10.2000 JP 2000317888**
**29.03.2001 JP 2001096400**
**29.03.2001 JP 2001096401**

(71) Applicants:
• **BOSCH BRAKING SYSTEMS Co., Ltd.**
**Tokyo 150-0002 (JP)**
• **Denso Corporation**
**Kariya-shi, Aichi-ken, 448-8661 (JP)**

(72) Inventors:
• **Oka, Hiroyuki,**
**c/oBosch Braking Systems Co., Ltd.**
**Higashimatsuyama-shi, Saitama-ken3550021 (JP)**

• **Shimada, Masahiro,**
**c/oBosch Braking Syst. Co., Ltd**
**Higashimatsuyama-shi, Saitama-ken3550021 (JP)**
• **Watanabe, Satoru,**
**c/oBosch Braking Syst. Co., Ltd**
**Higashimatsuyama-shi, Saitama-ken3550021 (JP)**
• **Niino, Hiroaki, c/o Denso Corporation**
**Kariya-shi, Aichi 448-8661 (JP)**
• **Maki, Kazuya, c/o Denso Corporation**
**Kariya-shi, Aichi 448-8661 (JP)**
• **Sawada, Mamoru, c/o Denso Corporation**
**Kariya-shi, Aichi 448-8661 (JP)**

(74) Representative: **VOSSIUS & PARTNER**
**Siebertstrasse 4**
**81675 München (DE)**

(54) **Brake apparatus**

(57) In a brake apparatus of the present invention, as MCY pressure is developed by a master cylinder (MCY) 1 according to the forward movement of a primary inner piston 9, a pump of a braking force control device arranged between the MCY 1 and wheel cylinders (WCYs) sucks up hydraulic fluid from the MCY 1 to discharge the hydraulic fluid to the WCYs. Thus, WCY pressure controlled according to operational conditions of various modes is developed. The WCY pressure is supplied to a control pressure chamber 40 to act on a step 8e of a primary outer piston 8. The primary outer piston 8 moves relative to the primary inner piston 9 in such a manner that the force produced by the MCY pressure, the force produced by the WCY pressure, the spring force of a control spring 13, and the frictional force of fluid-tightly slidable portions of the primary outer piston 8 are balanced, whereby the pedal travel can remain the same as that in service braking mode. Therefore, the travel of input side can be modulated or compensated to be equal to the travel in the service braking mode.

FIG.4

**Description**

The present invention relates to a brake apparatus in which additional brake systems such as a regenerative brake system are employed in addition to a service brake system. The service brake system is a brake system deploying brake pressure by a master cylinder. The brake apparatus has a function of modulating the travel of a brake operational member such as a brake pedal such that the braking force generated by the master cylinder is reduced by an amount corresponding to braking force generated by the operation of the additional brake system. In the following description, the term "master cylinder" will be sometimes referred to as "MCY" and the term "wheel cylinder" will be sometimes referred to as "WCY".

For example, in a conventional brake apparatus (or brake system) of an automobile, a brake pressure intensifying device has been employed which hydraulically intensifies the pedal force on a brake pedal into predetermined magnitude to develop large brake pressure. The brake pressure intensifying device functions to provide large braking force from small pedal force on the brake pedal, thereby securing the braking performance and reducing the fatigue of a driver.

In the conventional brake pressure intensifying devices, a control valve is actuated by an input based on the pedal force applied to the brake pedal to develop hydraulic fluid pressure according to the input and the developed hydraulic fluid pressure is introduced into a power chamber, thereby intensifying the input at a predetermined ratio to output intensified pressure. A piston of a master cylinder is moved by the output of the brake pressure intensifying device so that the MCY outputs MCY pressure. The MCY pressure is introduced as brake pressure into wheel cylinders, thereby actuating the wheel brakes.

By the way, various brake systems have been conventionally proposed in which additional brake systems such as a regenerative brake system and a brake assist system are employed in addition to a service brake system which is operated by MCY pressure.

In such a brake system, braking force is generated by the additional brake system in addition to the braking force generated by MCY pressure. Therefore, for example, when the regenerative brake system is actuated, the braking force generated by the wheel cylinder pressure should be reduced by the amount corresponding to the braking force generated by the regenerative brake system. Accordingly, the wheel cylinder pressure is controlled to be lower than that required for braking. When the brake assist system for assisting the pedal force is actuated, the braking force generated by the wheel cylinder pressure should be greater than that for service braking. Accordingly, the wheel cylinder pressure is controlled to be higher than that required for service braking.

However, as the wheel cylinder pressure is controlled to be lower than that required for service braking relative to the same input, the amount of hydraulic fluid to be sucked from the MCY by a pump is reduced. This means that the travel of the master cylinder piston and therefore the travel of the input side, for example, the travel of the brake pedal are reduced. On the other hand, as the wheel cylinder pressure is controlled to be higher than that required for service braking, the amount of hydraulic fluid to be sucked from the MCY by the pump is increased. This means that the travel of the input side is increased. Such travel variation of the input side in braking maneuver affects the braking feel of a driver. In addition, variations of the wheel cylinder pressure in connection with actuation of the additional brake system affect the input of the master cylinder, thus also affecting the braking feel.

It is an object of the present invention to provide a brake apparatus of which travel characteristic can be changed in such a manner as to obtain deceleration (braking force) of a vehicle and travel of the input side which are equal to those for service braking whatever wheel cylinder pressure is changed in connection with the operation of an additional brake system.

It is another object of the present invention to provide a brake apparatus in which variations of wheel cylinder pressure do not affects the input side.

It is still another object of the present invention to provide a brake pressure intensifying master cylinder which can provide good braking feel whenever the travel characteristic is changed

To achieve the aforementioned objects, the present invention provides a brake apparatus comprising: a master cylinder having an input shaft which travels according to travel of an operational member for braking maneuver, a master cylinder pressure chamber, and a master cylinder piston which develops master cylinder pressure in said master cylinder pressure chamber according to the travel of said input shaft, a pump which is driven in braking maneuver, a braking force control device which controls, in braking maneuver, the discharge pressure of said pump according to at least either the operational condition for service braking or the operational condition for another braking different from the service braking, and a travel modulating device which modulates the travel of the operational member in braking maneuver by using the discharge pressure of the pump controlled by said braking force control device.

The brake apparatus of the present invention is characterized in that said travel modulating device controls the travel of said master cylinder piston by using the discharge pressure of the pump controlled by said braking force control device.

In addition, the brake apparatus of the present invention is characterized in that said pump discharges the

EP 1 149 747 A1

discharge pressure by using hydraulic fluid of said master cylinder pressure chamber and the discharge pressure of the pump controlled by said braking force control device is discharged to wheel cylinders as wheel cylinder pressure.

In addition, the brake apparatus of the present invention is characterized in that said travel modulating device is provided in said master cylinder coaxially with said master cylinder piston.

In addition, the brake apparatus of the present invention is characterized in that said master cylinder piston comprises a first piston which travels when receives the input, and a second piston which is fluid-tightly and slidably disposed relative to said first piston, wherein said second piston is moved relative to said first piston by applying said wheel cylinder pressure to said second piston, thereby controlling the travel of said first piston.

In addition, the brake apparatus of the present invention is characterized in that said second piston is formed in a cylindrical shape having an outer peripheral step, and is fluid-tightly and slidably fitted in an axial bore of a housing of the master cylinder or in a bore of a cylindrical member fixed to said housing, and said first piston is fluid-tightly and slidably fitted in said second piston, said brake apparatus further comprising a control pressure chamber into which said wheel cylinder pressure is introduced and which is formed between the outer periphery of said second piston and the inner periphery of the axial bore of said housing or the inner periphery of a bore of said cylindrical member and is defined by the outer peripheral step of said second piston, wherein said wheel cylinder pressure introduced into said control pressure chamber acts on said outer peripheral step of said second piston, thereby controlling the travel of said first piston.

In addition, the brake apparatus of the present invention is characterized in that said second piston is formed in a cylindrical shape having an inner peripheral step, and said first piston is fluid-tightly and slidably fitted in an axial bore of said second piston, said brake apparatus further comprising a control pressure chamber into which said wheel cylinder pressure is introduced and which is formed between the inner periphery of said second piston and the outer periphery of said first piston and is defined by the inner peripheral step of said second piston, wherein said wheel cylinder pressure introduced into said control pressure chamber acts on said inner peripheral step of said second piston, thereby controlling the travel of said first piston.

In addition, the brake apparatus of the present invention is characterized in that said input shaft, which is moved by the input according to the travel of the operational member, is movable relative to said master cylinder piston, said brake apparatus further comprising a control spring which is disposed in a compressed state between said input shaft and said master cylinder piston for controlling the travel of said input shaft, wherein said input of said input shaft and the spring force of said control spring act in the same direction, said wheel cylinder pressure acts on said input shaft against said input and the spring force of said control spring, and said wheel cylinder pressure is controlled such that the force produced by said wheel cylinder pressure, said input, and the spring force of said control spring are balanced.

In addition, the brake apparatus of the present invention is characterized in that said travel modulating device is located out of the central axis of said master cylinder piston.

In addition, the brake apparatus of the present invention is characterized in that said operational travel modulating device has a travel modulating piston for controlling the travel of said master cylinder piston, said travel modulating piston is moved by applying said master cylinder pressure to said travel modulating piston in one direction and applying said wheel cylinder pressure to said travel modulating piston in a direction opposite to said one direction, thereby controlling the travel of said master cylinder piston.

In addition, the brake apparatus of the present invention is characterized in that said travel modulating piston is composed of a large-diameter piston portion at its one side portion and a small-diameter piston portion at it's the other side portion, said master cylinder pressure acts on said large-diameter piston portion and said wheel cylinder pressure acts on said small-diameter piston portion.

In addition, the brake apparatus of the present invention is characterized in that said travel modulating piston is composed of a large-diameter piston portion at its one side portion and a small-diameter piston portion at it's the other side portion, said master cylinder pressure acts on said large-diameter piston portion and said wheel cylinder pressure acts on a step between said large-diameter piston portion and said small-diameter piston portion.

In addition, the brake apparatus of the present invention is characterized by further comprising a biasing means for biasing said travel modulating piston in a direction opposite to the action of said master cylinder pressure, wherein said wheel cylinder pressure is controlled such that the force produced by said master cylinder pressure, the force produced by said wheel cylinder pressure, and the biasing force of said biasing means are balanced.

In addition, the brake apparatus of the present invention is characterized in that said large-diameter piston portion is sealed by metal seal and said small-diameter piston portion is sealed by at least either metal seal or elastic seal.

In addition, the brake apparatus of the present invention is characterized in that in the event of failure of said pump, said master cylinder pressure is supplied to said wheel cylinders.

In addition, the brake apparatus of the present invention is characterized in that the input is applied to said master cylinder piston after intensified by a brake pressure intensifying device at a preset servo ratio by using pressure

3

of a pressure source, and said servo ratio is set smaller than the servo ratio normally used for service braking.

In addition, the brake apparatus of the present invention is characterized in that in the event of failure of said pressure source, the force applied to said operational member is transmitted through said brake pressure intensifying device without magnification.

In addition, the brake apparatus of the present invention is characterized in that said travel modulating device controls the travel of said input shaft according to the discharge pressure of the pump controlled by said braking force control device.

In addition, the brake apparatus of the present invention is characterized in that said travel modulating device has a travel control spring disposed between said master cylinder piston and said input shaft, and said travel modulating device shortens the travel of said input shaft such that the discharge pressure of the pump controlled by a pressure control valve, the spring force of said travel control spring, and said input are balanced.

In addition, the brake apparatus of the present invention is characterized in that said braking force control device controls such that the discharge pressure of said pump is greater when another braking different from said service braking is not conducted, and the discharge pressure of said pump is smaller when said another braking is conducted.

In addition, the brake apparatus of the present invention is characterized in that said master cylinder piston is operated with the discharge pressure of said pump controlled by said braking force control device, and wheel brakes are actuated with master cylinder pressure developed by this operation of said master cylinder piston.

In addition, the brake apparatus of the present invention is characterized in that wheel brakes are actuated with the discharge pressure of the pump controlled by said braking force control device.

In addition, the brake apparatus of the present invention is characterized in that said another braking is a regenerative braking.

In the brake apparatus of the present invention having the aforementioned structure, the discharge pressure of the pump (hereinafter, sometimes referred to as "pump discharge pressure") is controlled by the braking force control device according to at least either the operational condition for service braking or the operational condition for another braking different from the service braking. The operation of the travel modifying device is controlled by the controlled pump discharge pressure, thereby modulating the travel of the operational member in braking maneuver. Therefore, the travel of the operational member can remain the same as for the service braking whenever the wheel cylinder pressure is varied relative to the same input according to the operation such as service braking operation, regenerative braking operation, or brake assist operation.

In the present invention, for example, the travel of the master cylinder is modulated for modulating the travel of the operational member.

According to the present invention, the travel of the master cylinder piston can be remain the same as for service braking without being influenced by different operation. However, the input applied to the master cylinder piston is varied according to changes in wheel cylinder pressure. Therefore, the present invention is preferably applied to a brake system which can withstand even when the input is varied.

According to the present invention, the travel of the master cylinder piston can be remain the same as for service braking without being influenced by different operations as mentioned above. During this, the input applied to the master cylinder piston is not varied whenever wheel cylinder pressure is varied. Therefore, the brake apparatus of the present invention is suitably applied for various braking operations.

According to the present invention, the travel modulating device is located out of the central axis of said master cylinder piston, thus simplifying the construction of the master cylinder and the travel modulating device, improving the assembly work, and reducing the cost involved. The simplified construction leads to decrease in number of portions producing frictional force of the travel modulating device, thus improving the accuracy of travel control of the travel modulating device.

Further, according to the present invention, in the event of failure of the pump, the master cylinder pressure is introduced directly to the wheel cylinders, thereby securely actuating the wheel brakes with the master cylinder pressure.

According to the present invention, the servo ratio of the brake pressure intensifying device can be set to be smaller than the normal servo ratio for service braking. Therefore, the brake apparatus of the present invention can employ a brake pressure intensifying device of reduced size.

According to the present invention, in the event of failure of pressure source of the brake pressure intensifying device, the operating force of the operational member can be directly transmitted to the master cylinder piston without magnification to operate the master cylinder piston. Accordingly, even in the event of such failure of pressure source, the brake apparatus can securely develop master cylinder pressure in the master cylinder pressure chamber.

According to the present invention, the travel of the input shaft is controlled by the travel modulating device according to the pump discharge pressure. Therefore, the travel of the input shaft can be shortened relative to the travel of the master cylinder piston according to the pump discharge pressure.

**EP 1 149 747 A1**

Since the braking force is intensified by pump discharge pressure capable of providing easy pressure control, the braking force can be easily and minutely controlled as compared to a conventional brake system with only a conventional braking intensifying device.

According to the present invention, the travel of the input shaft is shortened in such a manner that the pump discharge pressure controlled by the braking force control device, the spring force of the stroke control spring, and the input are balanced.

When the another brake system is not actuated, the pump discharge pressure is set to be greater by the braking force control device. By this greater pump discharge pressure, the wheel brakes are actuated. The travel of the master cylinder piston is increased by the greater pump discharge pressure. However, since the greater the pump discharge pressure, the greater the ratio of shortening the travel of the input shaft, the travel of the input shaft is shortened at a greater ratio. On the other hand, when the another brake system is actuated, the pump discharge pressure is set to be smaller by the braking force control device. By this smaller pump discharge pressure, the wheel brakes are actuated. The braking force generated by the smaller pump discharge pressure is reduced by an amount corresponding to the braking force generated by the another braking system so the braking force as a whole of the brake apparatus remains substantially the same as the braking force for service braking. Since the ratio of shortening the travel of the input shaft is smaller because the pump discharge pressure is controlled to be smaller, and the travel of the master cylinder is smaller because the master cylinder pressure is smaller, the travel of the input shaft becomes substantially equal to the travel for service braking.

Further, the ratio of shortening the travel of the input shaft is controlled according to the travel of the master cylinder or the master cylinder pressure. That is, the travel of the input shaft is determined based on the travel of the master cylinder piston or the master cylinder pressure, whereby the travel of the input shaft can be shortened relative to the conventional one without affecting the operational feel. The brake system can provide good pedal feel.

According to the present invention, the master cylinder piston is operated by the pump discharge pressure controlled by the braking force control device so that the braking force generated by the master cylinder pressure corresponds to the operating force applied to the operational member or the stroke of the operational member.

According to the present invention, since the braking force is directly intensified by the pump discharge pressure, the braking force can be effectively intensified even without a brake pressure intensifying device as conventionally used. Therefore, the brake system can be simplified remaining large braking force, by omitting the brake pressure intensifying device.

According to the present invention, a regenerative brake system can be suitably used as the another brake system. The braking force generated by the master cylinder pressure is controlled to be greater when the regenerative brake system is not actuated and to be smaller when the regenerative brake system is actuated. Since the travel of the input shaft is controlled by the travel modifying device, however, the travel of the input shaft becomes smaller than the travel of the master cylinder piston according to the pump discharge pressure even when greater braking force is generated by the master cylinder pressure.

Still other objects and advantages of the invention will in part be obvious and will in part be apparent from the specification.

The invention accordingly comprises the features of construction, combinations of elements, and arrangement of parts which will be exemplified in the construction hereinafter set forth, and the scope of the invention will be indicated in the claims.

Fig. 1 is a sectional view showing a master cylinder in a first embodiment of the master cylinder according to the present invention;
Fig. 2 is a sectional view showing a master cylinder of a second embodiment according to the present invention;
Fig. 3 is a sectional view showing a master cylinder of a third embodiment according to the present invention;
Fig. 4 shows a fourth embodiment according to the present invention, showing a brake system employing the master cylinder of the third embodiment according to the present invention shown in Fig. 3;
Fig. 5 is a graph indicating brake characteristic curves during operation in different operational mode;
Fig. 6 is a sectional view showing a fifth embodiment of the present invention, showing a master cylinder similar to the master cylinder of third embodiment of the present invention shown in Fig. 3, but incorporated with a vacuum booster;
Fig. 7 is a sectional view showing a sixth embodiment of the present invention, showing a master cylinder similar to the master cylinder of fifth embodiment of the present invention shown in Fig. 6, but incorporated with a hydraulic booster;
Fig. 8 is a partially enlarged sectional view of the sixth embodiment shown in Fig. 7;
Fig. 9 is a view similar to Fig. 4, but showing a brake system of a seventh embodiment of the present invention;
Figs. 10(a)-10(c) are sectional views showing pedal travel modulating devices 129 of eighth through tenth embodiment of the present invention, respectively;

Fig 11 is a sectional view showing a pedal travel modulating device of an eleventh embodiment of the present invention;

Fig 12 is a sectional view showing a pedal travel modulating device of a twelfth embodiment of the present invention;

Fig 13 is a sectional view showing a pedal travel modulating device of a thirteenth embodiment of the present invention;

Fig 14 is a sectional view showing a pedal travel modulating device of a fourteenth embodiment of the present invention;

Fig. 15 is a sectional view similar to Fig. 4, but showing a fifteenth embodiment of the present invention;

Fig. 16(a)-16(d) show brake characteristics of a brake pressure intensifying master cylinder shown in Fig. 15, wherein Fig. 16(a) is a graph showing pedal force versus MCY pressure characteristics, Fig. 16(b) is a graph showing braking force, Fig. 16(c) is a graph showing the pedal force, and Fig. 16(d) is a graph showing pedal force versus pedal travel characteristics;

Fig. 17 is a sectional view similar to Fig. 1, but showing a sixteenth embodiment of the present invention; and

Fig. 18 is a diagram schematically showing a brake system of the sixteenth embodiment.

Hereinafter, embodiments of the present invention will be described with reference to the attached drawings.

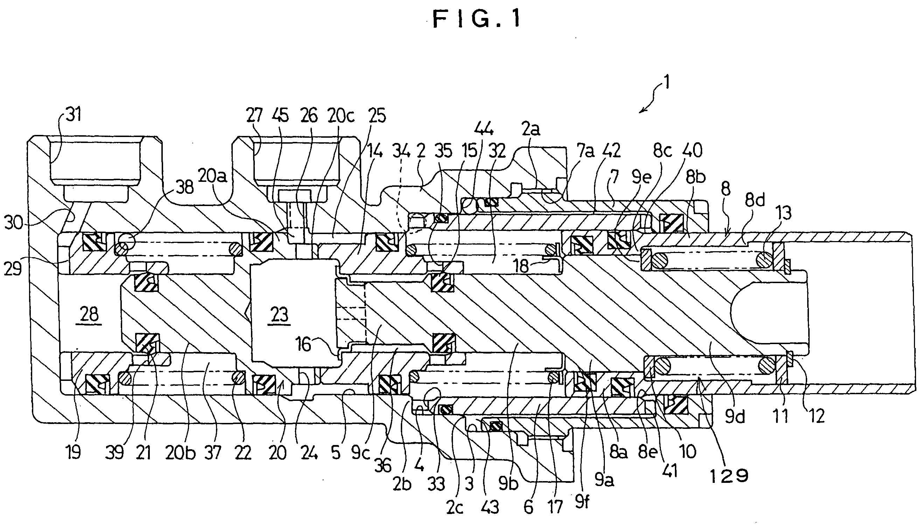

Fig. 1 is a sectional view showing a master cylinder in a first embodiment of the master cylinder according to the present invention. In the following description, the terms such as "front or forward" and "rear or back" refer to the left and the right, respectively, in the drawings.

As shown in Fig. 1, a master cylinder 1 of the first embodiment has a housing 2. The housing 2 has a stepped bore formed therein of which front end is closed and which is composed of a first bore 3 opening the right end of the housing 2, a second bore 4 formed successively from the left end of the first bore 3 and having a diameter smaller than that of the first bore 3, and a third bore 5 formed successively from the left end of the second bore 4 and having a diameter smaller than that of the second bore 4.

In the stepped bore, fluid-tightly fitted in the second bore 4 is a first cylindrical member 6 which extends through the first bore 3 to protrude in the backward direction from the end of the housing 2. Fluid-tightly fitted in the first bore 3 is a second cylindrical member 7 with a bottom 7b. The second cylindrical member 7 is formed with an external thread 7a to be engaged with an internal thread 2a' formed in a rear end portion of the housing 2. By engaging the external thread 7a with the internal thread 2a', the second cylindrical member 7 is fixed not to move in the longitudinal direction. The first cylindrical member 6 is fitted between a step 2b, as a boundary between the second bore 4 and the third bore 5 of the housing 2, and the bottom 7b of the second cylindrical member 7 so that it is not allowed to move in the longitudinal direction.

Fluid-tightly and slidably received in the first cylindrical member 6 is a cylindrical primary outer piston (corresponding to the second piston of the present invention) 8 which is also fluid-tightly and slidably received in the second cylindrical member 7 and extend to protrude in the backward direction from the end of the second cylindrical member 7. The primary outer piston 8 is a stepped piston composed of a large-diameter portion 8a which is fluid-tightly and slidably fitted in the first cylindrical member 6 and a small-diameter portion 8b which protrudes fluid-tightly and slidably from the second cylindrical member 7 and of which diameter is slightly smaller than that of the large-diameter portion 8a.

Further, fluid-tightly and slidably fitted in the primary outer piston 8 is a primary inner piston (corresponding to the first piston of the present invention) 9. The primary inner piston 9 is also a stepped piston composed of a large-diameter portion 9a which is fluid-tightly slidably fitted in the primary outer piston 8, a first medium-diameter portion 9b which extends in the forward direction from the large-diameter portion 9a and of which diameter is slightly smaller than that of the large-diameter portion 9a, a small-diameter portion 9c which extends further in the forward direction from the first medium-diameter portion 9b and of which diameter is smaller than that of the first medium-diameter portion 9b, and a second medium-diameter portion 9d which extends in the backward direction from the large-diameter portion 9a and of which diameter is smaller than that of the large-diameter portion 9a. The primary inner piston 9 is designed to receive the output of a brake pressure intensifying device of a known type, e.g. a vacuum booster (not shown in this drawing). The brake pressure intensifying device is operated by a brake pedal (not shown) as well known in the art.

In this case, the servo ratio of the brake pressure intensifying device used together with the MCY1 of this first embodiment is set to be smaller than the servo ratio of a conventionally known brake pressure intensifying device. That is, the brake pressure intensifying device used together with the MCY1 of this embodiment is set such that its output during service braking is lower than that of the conventionally known brake pressure intensifying device. Accordingly, during service braking, MCY pressure is developed by the MCY 1 because of the output of this brake pressure intensifying device and the MCY pressure is intensified by a braking force control system as described later, thereby obtaining braking force required for service braking.

First and second spring retainers 10, 11 are arranged in the second medium-diameter portion 9d of the primary inner piston 9. The forward movement of the first spring retainer 10 relative to the primary inner piston 9 is restricted by an outer peripheral step 9e between the large-diameter portion 9a and the second medium-diameter portion 9d when the first spring retainer 10 is in contact with the outer peripheral step 9e. In addition, the forward movement of the first spring retainer 10 relative to the primary outer piston 8 is restricted by a first inner peripheral step 8c of the primary outer piston 8 when the first spring retainer 10 is in contact with the first inner peripheral step 8c. On the other hand, the backward movement of the second spring retainer 11 relative to the primary inner piston 9 is restricted by a stopper ring 12 disposed on a rear end portion of the second medium-diameter portion 9d because the second spring retainer 11 is in contact with the stopper ring 12. In addition, the forward movement of the second spring retainer 11 relative to the primary outer piston 8 is restricted by a second inner peripheral step 8d of the primary outer piston 8 when the second spring retainer 11 is in contact with the second inner peripheral step 8d. Disposed in a compressed state between the first and second spring retainers 10, 11 is a control spring (travel control spring) 13.

A front portion of the first medium-diameter portion 9b of the primary inner piston 9 is fluid-tightly and slidably fitted in a bore of a third cylindrical member 14 via a first cup seal 15. The third cylindrical member 14 is fluid-tightly and slidably fitted in the third bore 5 of the housing 2. The forward movement of the third cylindrical member 14 relative to the primary inner piston 9 is restricted by a cylindrical stopper 16 disposed on a front end portion of the small-diameter portion 9c when the third cylindrical member 14 is in contact with the cylindrical stopper 16. Disposed in a compressed state between the primary inner piston 9 and the third cylindrical member 14 is a primary return spring 17. In this case, the spring force of the primary return spring 17 is applied to the primary inner piston 9 through the third retainer 18. The spring force of the primary return spring 17 always biases the primary inner piston 9 in the backward direction and always biases the third cylindrical member 14 in the forward direction.

Fluid-tightly and fixedly fitted in the third bore 5 of the housing 2 is a fourth cylindrical member 19. Received in the bore of the fourth cylindrical member 19 and the third bore 5 is a secondary piston 20. The secondary piston 20 is a stepped piston composed of a large-diameter portion 20a at the center thereof, a small-diameter portion 20b which extends in the forward direction from the large-diameter portion 20a and of which diameter is smaller than that of the large-diameter portion 20a, and a medium-diameter portion 20c which extends in the backward direction from the large-diameter portion 20a and of which diameter is smaller than that of the large-diameter portion 20a but larger than that of the small-diameter portion 20b. The large-diameter portion 20a is fluid-tightly and slidably fitted in the inner surface of the third bore 5 and the small-diameter portion 20b is fluid-tightly and slidably fitted in the bore of the forth cylindrical member 19 via a second cup seal 21. Disposed in a compressed state between the fourth cylindrical member 19 and the secondary piston 20 is a secondary return spring 22. The spring force of the secondary return spring 22 always biases the secondary piston 20 in the backward direction. Since the rear end of the medium-diameter portion 20c of the secondary piston 20 is in contact with the front end of the third cylindrical member 14, the secondary piston 20 and the third cylindrical member 14 move together in the longitudinal direction.

The backward movement of the secondary piston 20 is limited by a stopper 45 provided in the housing 2 when a step 20d between the large-diameter portion 20a and the medium-diameter portion 20c comes in contact with the stopper 45.

The rear end portion of the secondary piston 20 is formed in a cylindrical shape so as to have a bore. In this bore of the secondary piston 20 and the bore of the third cylindrical member 14, a first atmospheric pressure chamber 23 is defined between the front end of the primary inner piston 9 and the rear end of the secondary piston 20. The first atmospheric pressure chamber 23 is always in communication with a reservoir (not shown) for storing hydraulic fluid, through radial holes 24 of the medium-diameter portion 20c of the secondary piston 20, an annular space 25 defined by the outer periphery of a front end portion of the third cylindrical member 14, the outer periphery of the medium-diameter portion 20c of the secondary piston 20, and the inner periphery of the third bore 5 of the housing 2, a passage 26 of the housing 2, and a first reservoir connecting port 27. In the bore of the fourth cylindrical member 19, a second atmospheric pressure chamber 28 is defined between the front end of the secondary piston 20 and the housing 2. The second atmospheric pressure chamber 28 is always in communication with the reservoir through radial gaps 29 formed in the front end of the fourth cylindrical member 19, a passage 30 of the housing 2, and a second reservoir connecting port 31.

Inside the first cylindrical member 6 and in the second bore 4 of the housing 2, a first MCY pressure chamber 32 is defined between the front end of the primary inner piston 8 and the outer peripheral step 9f of the primary inner piston 9 and the rear end of the third cylindrical member 14. The first MCY pressure chamber 32 is always in communication with WCYs (not shown) of a first brake circuit through radial gaps 33 formed in the front end of the first cylindrical member 6 and a first output port 34 formed in the housing 2. Formed in a rear end portion of the third cylindrical member 14 are radial holes 35 which are always in communication with the first MCY pressure chamber 32. When the seal lip of the first cup seal 15 is positioned behind the radial holes 35 as shown in Fig. 1, the radial holes 35 communicate with the first atmospheric pressure chamber 23 through an annular space 36 between the inner periphery of the bore of the third cylindrical member 14 and the outer periphery of the small-diameter portion 9c of the primary inner piston 9 so that the first MCY pressure chamber 32 is in communication with the first atmospheric pressure chamber 23 i.e. the reservoir through the radial holes 35 and the annular space 36. On the other hand, when the seal lip of the first cup seal 15 is positioned ahead of the radial holes 35, the radial holes 35 are isolated from the annular space 36 i.e.

the first atmospheric pressure chamber 23 so that the first MCY pressure chamber 32 is isolated from the first atmospheric pressure chamber 23 i.e. the reservoir.

Inside the third bore 5 of the housing 2, a second MCY pressure chamber 37 is defined between the secondary piston 20 and the rear end of the fourth cylindrical member 19. The second MCY pressure chamber 37 is always in communication with WCYs (not shown) of a second brake circuit through a second output port 38 formed in the housing 2. Formed in a rear end portion of the fourth cylindrical member 19 are radial holes 39 which are always in communication with the second MCY pressure chamber 37. When the seal lip of the second cup seal 21 is positioned behind the radial holes 39 as shown in Fig. 1, the radial holes 39 communicate with the second atmospheric pressure chamber 28 so that the second MCY pressure chamber 37 is in communication with the second atmospheric pressure chamber 28 i.e. the reservoir through the radial holes 39. On the other hand, when the seal lip of the second cup seal 21 is positioned ahead of the radial holes 39, the radial holes 39 are isolated from the second atmospheric pressure chamber 28 so that the second MCY pressure chamber 37 is isolated from the second atmospheric pressure chamber 28 i.e. the reservoir.

Inside the bore of the first cylindrical member 6, a control pressure chamber 40 is defined between an outer peripheral step 8e of the primary outer piston 8 and the rear end portion of the second cylindrical member 7 such that the control pressure chamber 40 is coaxial with the primary outer piston 8 and the primary inner piston 9. The control pressure chamber 40 is always in communication with a control pressure inlet 44 formed in the housing 2 through radial gaps 41 formed in the rear end of the first cylindrical member 6, an annular passage 42 formed between the outer periphery of the first cylindrical member 6 and the inner periphery of the second cylindrical member 7, and an annular space 43 which is a space between a step 2c, as a boundary between the first bore 3 and the second bore 4 of the housing 2, and the front end of the second cylindrical member 7. Connected to the control pressure inlet 44 is a braking force control system (not shown). Since one example of the braking force control system will be described in detail in the fourth embodiment described later, just brief description will be made as regard to the braking force control system in this embodiment.

As MCY pressure is developed in the first and second MCY pressure chambers 32, 37, the braking force control system isolates the communication between the first and second MCY pressure chambers 32, 37 and the respective WCYs and energizes the pump of the braking force control system. Then, the pump sucks up hydraulic fluid from the first and second MCY pressure chambers 32, 37 and discharges the hydraulic fluid to the WCYs, supplying fluid pressure higher than the MCY pressure to the WCYs. The braking force control system controls the pressure in the WCYs in such a manner as to set the servo ratio to meet the operational conditions of the current operational mode. The braking force control system can be operated in several modes, for example, a service braking mode in which braking is applied only by MCY pressure (WCY pressure), a braking force control mode in which the braking force is controlled during service braking, and a brake coordination mode in which braking is applied by another braking system in addition to the service braking applied by WCY pressure.

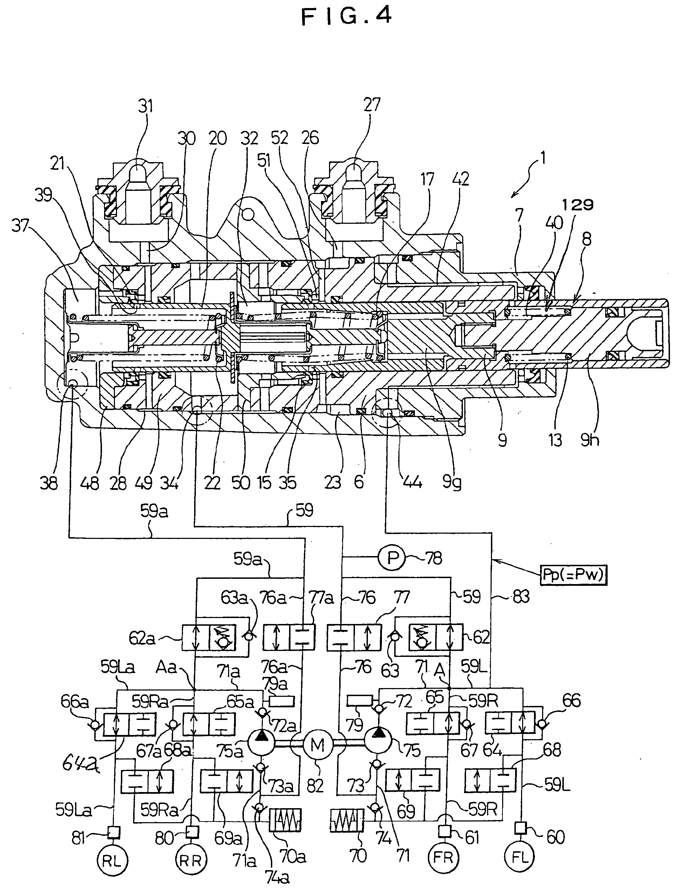

Besides a braking force control system which is actuated for service braking, the braking force control system includes an Anti-skid Brake control system (hereinafter, sometimes referred to as "ABS" control system) for canceling a tendency toward wheel lock by controlling W/C pressure in at least one, which is in locking tendency, of W/Cs 60, 61, 80, 81 (for simplifying the description, given with the same numerals as used in Fig. 4 described later), a Traction Control system (hereinafter, sometimes referred to as "TRC" control system) for canceling a tendency toward slipping by supplying pressurized fluid to at least one, which is in slipping tendency, of the W/Cs 60, 61 as driving wheels (It should be understood that while the driving wheels are front right and left wheels in this description, they are not limited thereto and may be rear right and left wheels or all of the wheels), a Vehicle Stability control system for stabilizing the turning-round angle of a vehicle by supplying pressurized fluid to a suitable W/C(s) of the W/Cs 60, 61, 80, 81 so as to automatically brake the certain wheel(s) when the turning-round angle of the vehicle does not correspond to the turning angle of a steering wheel, a Brake Assist control system (hereinafter, sometimes referred to as "BA" control system) for automatically adding braking force by supplying pressurized fluid to the respective W/Cs 60, 61, 80, 81 when braking force is insufficient, for instance when pedal force is too small to obtain required braking force, and an Automatic Brake control system for automatically braking wheels for achieving auto cruise control.

In the service braking mode, the braking force control system controls the WCY pressure to obtain normal braking force proportional to the pedal force on the brake pedal. For instance in a regenerative brake coordination mode, the braking force control system controls the WCY pressure to obtain braking force smaller than braking force generated by the service braking by the amount corresponding to braking force generated by the regenerative braking. In a brake assist control mode, the braking force control system controls the WCY pressure to obtain braking force larger than braking force in the service braking mode. Similar control may be conducted for the other additional brake systems.

In the MCY 1 of the first embodiment, WCY pressure controlled by the braking force control system is supplied to the control pressure chamber 40 through the control pressure inlet 44.

By the way, equilibrium-of-force expressions for the primary outer piston 8 and the primary inner piston 9 during the operation of the MCY 1 of this first embodiment are as follows.

In the following expressions, these terms will be utilized:

$W$ : input applied to the primary inner piston 9;

$P_m$ : MCY pressure;

$P_p$ : braking force control pressure of the control pressure chamber 40 (= WCY pressure $P_w$);

$A_{of}$ : sectional area (effective pressure receiving area) of the large-diameter portion 8a of the primary outer piston 8;

$A_{ob}$ : sectional area (effective pressure receiving area) of the small-diameter portion 8b of the primary outer piston 8;

$A_{ii}$ : sectional area (effective pressure receiving area) of the first medium-diameter portion 9b of the primary inner piston 9;

$A_{io}$ : sectional area (effective pressure receiving area) of the large-diameter portion 9a of the primary inner piston 9;

$F_s$ : spring force of the control spring 13;

$F_{sm}$ : spring force of the primary return spring 17;

$f_1$ : frictional force of the primary inner piston 9 due to the first cup seal 15;

$f_2$ : frictional force of the primary outer piston 8 and the primary inner piston 9 due to the seal for maintaining the fluid-tight state between the piston 8 and the large-diameter portion 9a of the piston 9;

$f_3$ : frictional force of the primary outer piston 8 due to the seal for maintaining the fluid-tight state between the piston 8 and first cylindrical member 6; and

$f_4$ : frictional force of the primary outer piston 8 due to the seal for maintaining the fluid-tight state between the piston 8 and second cylindrical member 7.

1) Equilibrium-of-force expression of the primary outer piston 8

$$P_p \times (A_{of} - A_{ob}) + F_s - f_3 - f_4 + f_2 = P_m \times (A_{of} - A_{io}) \qquad \text{Expression(1)}$$

2) Equilibrium-of-force expression of the primary inner piston 9

$$W = P_m \times (A_{io} - A_{ii}) + F_s - F_{sm} + f_1 + f_2 \qquad \text{Expression(2)}$$

from Expression (1) and Expression (2), the following expression is established:

$$W = P_m \times (A_{of} - A_{ii}) - P_p \times (A_{of} - A_{ob}) + F_{sm} + f_1 + f_3 + f_4 \qquad \text{Expression(3)}$$

furthermore, from Expression (1), the following expression is established:

$$F_s = P_m \times (A_{of} - A_{io}) - P_p \times (A_{of} - A_{ob}) + f_3 + f_4 - f_2 \qquad \text{Expression(4)}$$

The pedal travel of the brake pedal when the MCY 1 of the first embodiment is employed will be studied based on the above expressions. As MCY pressure is developed by the actuation of the MCY 1, the braking force control system is actuated. During the operation of the braking force control system, the MCY pressure is intensified by the braking force control system and then supplied to the WCYs. That is, the braking force control pressure (= WCY pressure $P_w$) $P_p$ > the MCY pressure $P_m$. Since $(A_{of} - A_{io})$ and $(A_{of} - A_{ob})$ are positive and constant in Expression (4), increase in the intensifying rate of the braking force control pressure $P_p$ (WCY pressure $P_w$) relative to the MCY pressure $P_m$ leads to decrease in the spring force $F_s$ of the control spring 13 i.e. decrease in the deflection of the spring 13 according to Expression (4). To the contrary, decrease in the intensifying rate of the braking force control pressure $P_p$ (WCY pressure $P_w$) relative to the MCY pressure $P_m$ leads to increase in the spring force $F_s$ of the control spring 13 i.e. increase in the deflection of the spring 13 according to Expression (4). In turn, increase in the deflection of the spring 13 leads to increase in the relative movement of the primary outer piston 8 to the primary inner piston 9. To the contrary, decrease in the deflection of the spring 13 leads to decrease in the relative movement of the primary outer piston 8 to the primary inner piston 9. In this manner, the relative movement depends on the braking force control pressure $P_p$ (WCY pressure $P_w$) controlled by the braking force control system.

By changing the relative movement, the MCY 1 can exhibit various brake characteristics. In case of a setting that the relative movement should be smaller than that for service braking, as the primary inner piston 9 travels the same distance as that for service braking because the primary inner piston 9 moves together with the brake pedal, the primary outer piston 8 travels forwards a distance greater than that for service braking to hold the relative movement smaller than that for service braking. Therefore, in this case, the amount of fluid to be discharged is greater than that for the service braking. To the contrary, in case of a setting that the relative movement should be greater than that for service braking, as the primary inner piston 9 travels the same distance as that for service braking, the primary outer piston 8 travels forwards a distance smaller than that for service braking to hold the relative movement greater than that for service braking. Therefore, in this case, the amount of fluid to be discharged is smaller than that for the service braking.

Description will be made as regard to the pedal travel in case that the MCY 1 is used to coordinate the regenerative brake system. In the regenerative brake coordination mode, the setting is made such that the braking force generated by the WCY pressure is smaller than that in the service braking mode by the amount corresponding to the braking force generated by the regenerative brake system so that the WCY pressure $P_w$ is smaller than the WCY pressure $P_w$ in the service braking mode. Since the relative movement of the primary outer piston 8 to the primary inner piston 9 is accordingly increased, the amount of fluid discharged from the MCY 1 should be smaller than that in the service braking mode with the pedal travel remaining the same as in the service braking mode (i.e. the travel of the primary inner piston 9 also remains the same as in the service braking mode.). Since the setting is made such that the WCY pressure in the regenerative brake coordination mode is smaller than that in the service braking mode as mentioned above, the amount of fluid to be sucked from the MCY 1 by the pump of the braking force control system is smaller than that in the service braking mode, thereby making the pedal travel equal to the pedal travel in the service braking mode even when the regenerative brake system is actuated.

Description will be made as regard to the pedal travel in case that the MCY 1 is used to coordinate the brake assist control system. In the brake assist control mode, the setting is made such that the braking force generated by the WCY pressure is greater than that in the service braking mode by the amount for assisting the braking force so that the WCY pressure $P_w$ is greater than the WCY pressure $P_w$ in the service braking mode. Since the relative movement of the primary outer piston 8 to the primary inner piston 9 is accordingly decreased, the amount of fluid discharged from the MCY 1 should be greater than that in the service braking mode with the pedal travel remaining the same as in the service braking mode. Since the setting is made such that the WCY pressure in the brake assist control mode is greater than that in the service braking mode as mentioned above, the amount of fluid to be sucked from the MCY 1 by the pump of the braking force control system is greater than that in the service braking mode, thereby making the pedal travel equal to the pedal travel in the service braking mode even when the brake assist control system is actuated.

As mentioned above, in the MCY 1 of the first embodiment, the pedal travel can remain the same as in the service braking mode whenever the WCY pressure is varied relative to the same input according to the operation of the braking force control system. That is, the primary outer piston 8 and the control pressure chamber 40 cooperate to compose a pedal travel modulating device 129.

In the MCY 1, since the relation between the input W, the MCY pressure $P_m$, and the braking force control pressure $P_p$ (WCY pressure $P_w$) is given by the Expression (3), the input W is involved in the braking force control pressure $P_p$ (WCY pressure $P_w$) so that variations in the braking force control pressure $P_p$ (WCY pressure $P_w$) leads to variation in the input W. Therefore, variations in the pedal travel can be modulated during the brake control is conducted at the WCY side as mentioned above, but variations in the pedal force can not be modulated.

Hereinafter, description will be made as regard to the action of the master cylinder 1 of the first embodiment having the aforementioned construction.

When the brake pedal is not depressed where the master cylinder 1 is not actuated, the brake pressure intensifying device is in the inoperative state, and the secondary piston 20 is in contact with the stopper 45 so that the primary outer piston 8, the primary inner piston 9, the first cylindrical member 14, and the secondary piston 20 are all in their rear-most positions as illustrated. In this state, the first cup seal 15 is positioned behind the radial holes 35 so that the first MCY pressure chamber 32 is in communication with the reservoir through the first atmospheric pressure chamber 23, while the second cup seal 21 is positioned behind the radial holes 39 so that the second MCY pressure chamber 37 is in communication with the reservoir through the second atmospheric pressure chamber 28. In addition, the braking force control system is in the inoperative state in which the pump is stopped.

As the brake pedal is depressed for service braking, the brake pressure intensifying device is actuated to intensify the pedal force to output increased force. Since the servo ratio of the brake pressure intensifying device is relatively small as mentioned above, the output is also relatively small. As the output of the brake pressure intensifying device is applied to the primary inner piston 9, the primary inner piston 9 and the primary outer piston 8 move together in the forward direction.

According to the forward movement of the primary inner piston 9, the first cup seal 15 moves to a position ahead of the radial holes 35 by passing the radial holes 35. As a result of this, the first MCY pressure chamber 32 is isolated from the first atmospheric pressure chamber 23 so as to develop MCY pressure in the first MCY pressure chamber 32. The MCY pressure in the first MCY pressure chamber 32 advances the third cylindrical member 14 and the secondary piston 20 together in the forward direction. According to the forward movement of the secondary piston 20, the second cup seal 21 moves to a position ahead of the radial holes 39 by passing the radial holes 39. As a result of this, the second MCY pressure chamber 37 is isolated from the second atmospheric pressure chamber 28 so as to develop MCY pressure in the second MCY pressure chamber 37. The MCY pressure in the first and second MCY pressure chambers 32, 37 is proportional to the pedal force or the pedal travel. Since the output of the brake pressure intensifying device is small, however, the MCY pressure is smaller than that required for service braking.

The MCY pressure in the first MCY pressure chamber 32 acts in the backward direction on the front end of the primary outer piston 8 so as to deflect the control spring 13, whereby the primary outer piston 8 moves in the backward direction relative to the primary inner piston 9.

Development of the MCY pressure in the MCY 1 triggers the braking force control system by a controller (not shown), so the pump of the braking force control system sucks up hydraulic fluid from the MCY 1 and discharges the hydraulic fluid to WCYs where WCY pressure is thereby developed. In this case, the WCY pressure is controlled to be higher than the MCY pressure by the braking force control system in such a manner as to obtain normal braking force proportional to the pedal force or the pedal travel. The WCY pressure is transmitted to the control pressure chamber 40 through the control pressure inlet 44 and acts on the step 8e of the primary outer piston 8 in the forward direction. Therefore, the primary outer piston 8 moves relative to the primary inner piston 9 in such a manner that the backward force by the MCY pressure, the forward force by the WCY pressure in the control pressure chamber 40, the forward force by the spring force of the control spring 13, and the frictional force at portions where the primary outer piston 8 slides fluid-tightly are balanced. The equilibrium-of-force expression for the primary outer piston 8 at this point is given by the aforesaid Expression (1).

In addition, the primary inner piston 9 moves in such a manner that the input in the forward direction (the output of the brake pressure intensifying device), the backward force by the MCY pressure, the backward force by the spring force of the control spring 13, and the frictional force at portions where the primary inner piston 9 slides fluid-tightly are balanced. The equilibrium-of-force expression for the primary inner piston 9 at this point is given by the aforesaid Expression (2).

In this manner, normal braking force is generated by the WCY pressure controlled by the control pressure chamber 40, whereby applying service braking. The relative movement of the primary outer piston 8 and the primary inner piston 9 is controlled to be equal to the pedal travel for service braking in case of using a conventional brake pressure intensifying device having a relatively high servo ratio.

As depression on the brake pedal is released, the primary inner piston 9 moves in the backward direction by the spring force of the primary return spring 17 and the MCY pressure of the first MCY pressure chamber 32 so that the primary outer piston 8 also moves in the backward direction together with the primary inner piston 9. As the first cup seal 15 moves to a position behind the radial holes 35 according to the backward movement of the primary inner piston 9, the first MCY pressure chamber 32 communicates with the first atmospheric pressure chamber 23 so as to reduce the MCY pressure in the first MCY pressure chamber 32 until extinction of the MCY pressure. As the MCY pressure in the MCY pressure chamber 32 is reduced, the secondary piston 20 moves in the backward direction by the spring force of the secondary return spring 22 and the MCY pressure in the second MCY pressure chamber 37. As the second cup seal 21 moves to a position behind the radial holes 39 according to the backward movement of the secondary piston 20, the second MCY pressure chamber 37 communicates with the second atmospheric pressure chamber 28 so as to reduce the MCY pressure in the second MCY pressure chamber 37 until extinction of the MCY pressure. The extinction of the MCY pressure makes the braking force control system inoperative where the pump is stopped. Then, the stop of the pump leads to extinction of WCY pressure and therefore to extinction of fluid pressure in the control pressure chamber 40. Accordingly, the primary outer piston 8 moves relative to the primary inner piston 9 by the spring force of the control spring 13. When the first spring retainer 10 comes in contact with the step 9e of the primary inner piston 9, the relative movement of the primary outer piston 8 to the primary inner piston 9 is stopped. As the rear end of the secondary piston 20 comes in contact with the stopper 45, the primary outer piston 8, the primary inner piston 9, the third cylindrical member 14, and the secondary piston 20 are in their respective rear-most positions. Thus, the first and second MCY pressure chambers 32, 27 and control pressure chamber 40 become at the atmospheric pressure so that the master cylinder 1 is inoperative, thereby canceling the service braking.

On the other hand, in the regenerative brake coordination mode, the braking force control system controls the WCY pressure to be smaller than that in the service braking mode by the amount corresponding to braking force generated by the operation of the regenerative brake system, as mentioned above, so that the resultant braking force should be substantially equal to the braking force in the service braking mode because the resultant braking force is the total of the braking force generated by the regenerative brake system and the braking force generated by WCY pressure controlled by the braking force control system. The pedal travel in this regenerative brake coordination mode can remain substantially the same as in the service braking mode.

In the brake assist control mode, the braking force control system controls the WCY pressure to be larger than that in the service braking mode as mentioned above so that the resultant braking force should be larger than the braking force in the service braking mode, thereby effectively performing the brake assist operation. The pedal travel in this brake assist control mode can remain substantially the same as in the service braking mode.

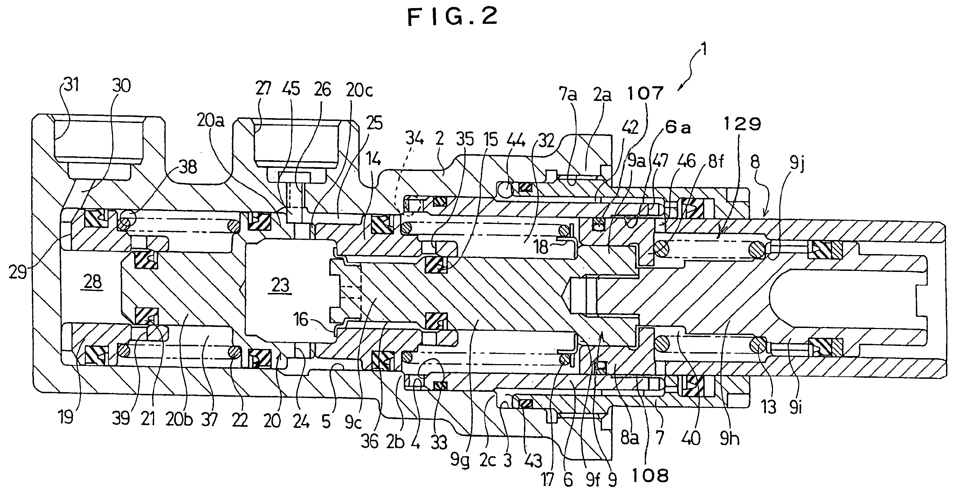

Fig. 2 is a sectional view similar to Fig. 1 but showing a second embodiment of the present invention. Throughout the following embodiments, corresponding component parts are designated with the same reference numeral utilized in the prior embodiment(s), thus omitting the detail description of such component parts.

While the primary outer piston 8 of the first embodiment is the stepped piston with the outer peripheral step 8e, a primary outer piston 8 of an MCY 1 in this second embodiment has an outer periphery of which diameter is constant from its front end to its rear end without the outer peripheral step 8e. The primary outer piston 8 is held in fluid-tight state relative to the inner periphery of the first cylindrical member 6 by a metal seal 107. As shown in this drawing, the metal seal 107 is provided at a portion as near the front end of the primary outer piston 8 as possible. The first cylindrical member 6 has an increased diameter portion 6a formed at a location behind the metal seal 107 when the primary outer piston 8 is in its rear-most position. The increased diameter portion 6a has an inner diameter larger than that of a portion of the first cylindrical member 6 on which the metal seal 107 slides. Since the increased diameter portion 6a is formed, an annular space 108 having a predetermined axial length is defined between the inner periphery of the cylindrical member 6 and the outer periphery of the primary outer piston 8. Because of the existence of the space 108, the communication between the control pressure chamber 40 and the control pressure inlet 44 is always allowed even when the primary outer piston 8 moves.

While the primary inner piston 9 of the first embodiment is composed of a single member, a primary inner piston 9 of the second embodiment is composed of two members: a front-side member 9g and a rear-side member 9h which are screwed and connected to each other so that they are movable together as an integral member. In addition, while the large-diameter portion 9a of the primary inner piston 9 of the first embodiment is fluid-tightly and slidably fitted in the front portion of the bore of the primary outer piston 8, a large-diameter portion 9a provided on the front-side member 9g of the primary inner piston 9 of the second embodiment is fluid-tightly and slidably fitted in a front portion of the bore of the primary outer piston 8 (there is no cup seal like the cup seal employed in the first embodiment between the outer periphery of the large-diameter portion 9a and the inner periphery of the primary outer piston 8, but the sealed state therebetween is held by a suitable seal means.)

Further in the second embodiment, there is no first spring retainer 10 as employed in the first embodiment. Instead of this, an annular spring retainer portion 8f is provided on the inner periphery of the front end portion of the primary outer piston 8. The spring retainer portion 8f can come in contact with the rear end of the large-diameter portion 9a of the front-side member 9f. There is also no second spring retainer 11 as employed in the first embodiment. Instead of this, the rear-side member 9h of the primary inner piston 9 has a large-diameter portion 9i of which diameter is larger than that of the large-diameter portion 9a of the front-side member 9g. Therefore, the control spring 13 is disposed in a compressed state between a step 9j by the large-diameter portion 9i and the spring retainer portion 8f. The large-diameter portion 9i of the rear-side member 9h is fluid-tightly and slidably fitted in a rear portion of the bore of the primary outer piston 8.

While the control pressure chamber 40 of the first embodiment is formed between the outer periphery of the primary outer piston 8 and the inner periphery of the first cylindrical member 6, a control pressure chamber 40 of the second embodiment is formed inside the primary outer piston 8, between the large-diameter portions 9a and 9i of the primary inner piston 9, and coaxially with the primary outer piston 8 and the primary inner piston 9. The control pressure chamber 40 is in communication with the control pressure inlet 44 through radial holes 46 of the primary outer piston 8, radial holes 47 (in the first embodiment, the radial gaps 41) of the first cylindrical member 6, and the passage 42.

The construction of the MCY 1 of the second embodiment is otherwise the same as that of the first embodiment.

Equilibrium-of-force expressions for the primary outer piston 8 and the primary inner piston 9 during the operation of the MCY 1 of the second embodiment are as follows:

In the following expressions, these terms will be utilized:

$A_{ib}$ : sectional area (effective pressure receiving area) of the large-diameter portion 9i of the rear-side member 9h of the primary inner piston 9;
and

$f_5$ : frictional force of the primary outer piston 8 and the primary inner piston 9 due to the seal for holding the fluid-tight state between the primary outer piston 8 and the large-diameter portion 9i of the primary inner piston 9.

1) Equilibrium-of-force expression of the primary outer piston 8

$$P_p \times (A_{ib} - A_{io}) + F_s - f_3 - f_4 + f_2 + f_5 = P_m \times (A_{of} - A_{io}) \qquad \text{Expression (5)}$$

2) Equilibrium-of-force expression of the primary inner piston 9

$$W = P_m \times (A_{io} - A_{ii}) + P_p \times (A_{ib} - A_{io}) + F_s - F_{sm} + f_1 + f_2 + f_5 \qquad \text{Expression (6)}$$

from Expression (5) and Expression (6), the following expression is established:

$$W = P_m \times (A_{of} - A_{ii}) + F_{sm} + f_1 + f_3 + f_4 \qquad \text{Expression (7)}$$

furthermore, from Expression (5), the following expression is established:

$$F_s = P_m \times (A_{of} - A_{io}) - P_p \times (A_{ib} - A_{io}) + f_3 + f_4 - f_2 - f_5 \qquad \text{Expression (8)}$$

As apparent from Expression (8), also in the MCY 1 of the second embodiment, since the spring force $F_s$ of the control spring 13 varies depending on the braking force control pressure $P_p$ (WCY pressure $P_w$) controlled by the braking force control system, just like the first embodiment. The relative position between the primary outer piston 8 and the primary inner piston 9 can be changed depending on the braking force control pressure $P_p$ (WCY pressure $P_w$). Also in the brake system employing the MCY 1 of this second embodiment, therefore, the pedal travel in the regenerative brake coordination mode or the brake assist control mode can be equal to the pedal travel in the service braking mode. That is, also in the MCY 1 of the second embodiment, the primary outer piston 8 and the control pressure chamber 40 cooperate to compose a pedal travel modulating device 129.

As apparent form Expression (7), in the MCY 1 of the second embodiment, the input W is involved in only the MCY pressure $P_m$ and not involved in the braking force control pressure $P_p$ (WCY pressure $P_w$). Therefore, even when the braking force control pressure $P_p$ (WCY pressure $P_w$) is controlled to be reduced or increased by the braking force control system, the input W is not influenced by the braking force control pressure $P_p$ (WCY pressure $P_w$). Therefore, the input W remains the same as in the service braking mode.

The action of the MCY 1 of the second embodiment is the same as those of the first embodiment.

According to the MCY 1 of the second embodiment, whenever the WCY pressure $P_w$ is controlled for the operation of the regenerative coordination brake system or the operation of brake assist system, the pedal travel and the pedal force can be set to be equal to that for service braking without being influenced by the controlled WCY pressure $P_w$.

It should be noted that the primary outer piston 8 may be a stepped piston composed of a large-diameter portion 8a and a small-diameter portion 8b and the communication between the control pressure chamber 40 and the control pressure inlet 44 is always allowed during movement of the primary outer piston 8 just like the first embodiment. In this case, however, the step between the large-diameter portion 8a and the small-diameter portion 8b is formed as smaller as possible in such a manner that change in the WCY pressure affects on the input as little as possible.

The action and effects of the MCY 1 of the second embodiment are otherwise the same as those of the aforementioned first embodiment.

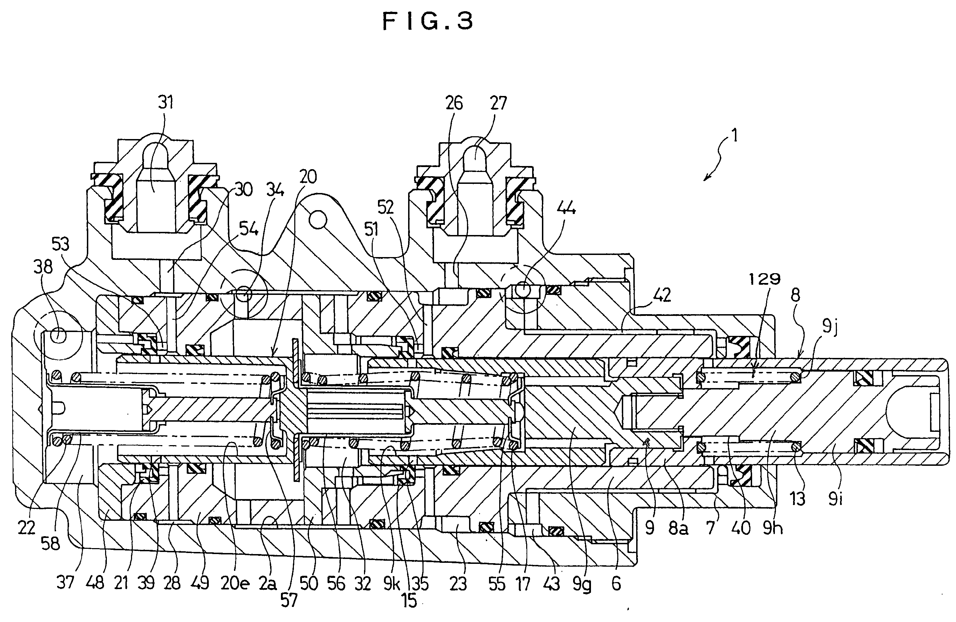

Fig. 3 is a sectional view similar to Fig. 1 but showing a third embodiment of the present invention.

The first and second cup seals 15, 21 are arranged in the movable parts i.e. the primary inner piston 9 and the secondary piston 20, respectively, and the radial holes 35, 39 cooperating with the first and second cup seals 15, 21 are formed in the stationary parts i.e. the third and fourth cylindrical members 14, 19 in any of the first and second embodiments. In this embodiment, to the contrary, radial holes 35, 39 are formed in movable parts i.e. a primary inner piston 9 and a secondary piston 20, respectively, and first and second cup seals 15, 21 cooperating with the radial holes 35, 39 are arranged in stationary parts.

The third and fourth cylindrical members 14, 19 used in the MCY 1 of the second embodiment do not exist in the MCY 1 of the third embodiment. Instead of the third and fourth cylindrical member 14, 19, fifth through seventh cylindrical members 48, 49, and 50 are inserted, in this order, into the axial bore 2a of the housing 2 and are stopped by the first cylindrical member 6 in the longitudinal direction. In this case, the sixth cylindrical member 49 are fluid-tightly fitted in the axial bore 2a. The first cup seal 15 is disposed between the first and seventh cylindrical members 6 and 50 and the second cup seal 21 is disposed between the fifth and sixth cylindrical members 48, 49.

A front end portion of the front-side member 9g of the primary inner piston 9 is formed in a cylindrical shape having an axial bore 9k. The secondary piston 20 is formed in a cylindrical shape having an axial bore 20e opening forward and a bottom. The radial holes 35 are formed in the front end portion of the front-side member 9g of the primary inner piston 9 to allow the communication between the outer periphery thereof and the inner periphery of the bore 9k while the radial holes 39 are formed in a front end portion of the secondary piston 20 to allow the communication between the outer periphery thereof and the inner periphery of the bore 20e.

The front-side member 9g of the primary inner piston 9 is fluid-tightly and slidably fitted in the first cylindrical member 6 and is inserted through the first cup seal 15 in the fluid-tight and slidable state. The secondary piston 20 is fluid-tightly and slidably fitted in the sixth cylindrical member 49 and is inserted through the second cup seal 21 in the fluid-tight and slidable state.

As mentioned above, in the MCY 1 of the third embodiment, the first and second cup seals 15, 21 are arranged in the stationary parts not the pistons 9, 20 and the radial holes 35, 39 are formed in the pistons 9, 20. This construction allows the pistons 9, 20 having shorter entire length, thus achieving a compact MCY having a shorter entire length.

Formed between the outer periphery of the first cylindrical member 6 and the inner periphery of the axial bore 2a of the housing 2 is the first atmospheric pressure chamber 23 which is an annular space. Formed between the outer periphery of the sixth cylindrical member 49 and the inner periphery of the axial bore 2a of the housing 2 is the second atmospheric pressure chamber 28 which is an annular space. The first MCY pressure chamber 32 is formed inside the bore 9k at the front end portion of the front-side member 9g of the primary inner piston 9, the bore of the seventh cylindrical member 50, and the bore of the sixth cylindrical member 49. In addition, the second MCY pressure chamber 37 is formed inside the bore 20e of the secondary piston 20, the bore of the fifth cylindrical member 48, and the axial bore 2a of the housing 2.

In the MCY 1 of the third embodiment, in the state shown in Fig. 3 where the MCY 1 is inoperative, the radial holes 35, 39 are positioned behind the seal lips of the first and second cup seals 15, 21, respectively. In this state, the first MCY pressure chamber 32 is at atmospheric pressure because it is in communication with the first atmospheric pressure chamber 23 through the radial holes 35, spaces between the back of the first cup seal 15 and the first cylindrical member 6, and axial holes 51 and radial holes 52 which are formed in the first cylindrical member 6, while the second MCY pressure chamber 37 is also at atmospheric pressure because it is in communication with the second atmospheric pressure chamber 28 through the radial holes 39, spaces between the back of the second cup seal 21 and the sixth cylindrical member 49, and axial holes 53 and radial holes 54 which are formed in the sixth cylindrical member 49.

As the pistons 9, 20 move forwards, the radial holes 35, 39 are positioned ahead of the seal lips of the first and second cup seals 15, 21, thereby isolating the radial holes 35, 39 from the spaces between the backs of the first and second cup seals 15, 21 and the first and sixth cylindrical members 6, 49, respectively. Therefore, the first and second MCY pressure chambers 32, 37 are isolated from the first and second atmospheric pressure chambers 23, 28, respectively so that MCY pressure is developed in the MCY pressure chambers 32, 37, respectively.

The primary return spring 17 is disposed in a compressed state between the primary inner piston 9 and the secondary piston 20 via two spring retainers 55, 56 which are extendable and have extension limits, while the secondary return spring 22 is disposed in a compressed state between the secondary piston 20 and the housing 2 via two spring retainers 57, 58 which are extendable and have extension limits.

The construction of the MCY 1 of the third embodiment is otherwise the same as that of the MCY 1 of the second embodiment.

When the MCY 1 of this third embodiment is in operation, equilibrium-of-force expressions for the primary outer piston 8 and the primary inner piston 9 are given by the aforementioned Expressions (5) and (6). Accordingly, the input W is given by the Expression (7) and the spring force of the control spring 13 is given by the Expression (8), as well as the second embodiment.

The MCY 1 of the third embodiment is similar in action as the second embodiment except that the radial holes 35, 39 move while the first and second cup seals 15, 21 do not move. The MCY 1 of the third embodiment has an effect of achieving reduction in the axial length of the MCY 1. Otherwise, the effects of the third embodiment are the same as those of the second embodiment.

Fig. 4 is a brake system of a fourth embodiment of the present invention.

The brake system of the fourth embodiment is a brake system employing the MCY 1 of the third embodiment. The brake system of this embodiment includes a hydraulic fluid supply line 59 connected to the first output port 34 for the first brake circuit, and first and second hydraulic fluid supply branches 59L, 59R at the end of the hydraulic fluid supply line 59. The first hydraulic fluid supply branch 59L is connected to a WCY 60 of a front left wheel FL while the second hydraulic fluid supply branch 59R connected to a WCY 61 of a front right wheel FR.

In the hydraulic fluid supply line 59, a normally-open selector valve 62 with a relief valve is provided. The selector valve 62 has a communication position and a relief-valve position. The selector valve 62 is set in the communication position when it is inoperative and is set in the relief-valve position when it is operative. The relief valve allows the flow of hydraulic fluid from the downstream side (WCY side) to the upstream side (MCY side) of this valve only when the fluid pressure at the downstream side of this valve exceeds a relief threshold. The setting value of the relief threshold can be changed. Further, the selector valve 62 is bypassed by a first check valve 63 for allowing the flow of hydraulic fluid from the upstream side to the downstream side of the selector valve 62.

First and second pressure-intensifying valves 64, 65 which are normally-open shut-off valves are located in the first and second hydraulic fluid supply branches 59L, 59R, respectively. The pressure-intensifying valves 64, 65 are bypassed by second and third check valves 66, 67 for allowing only the flow of hydraulic fluid from the downstream side to the upstream side of the associated pressure-intensifying valve. The first and second pressure-intensifying valves 64, 65 operate to intensify WCY pressure by supplying hydraulic fluid to the WCYs 60, 61 for the purpose of conducting Anti-skid Brake control (hereinafter, sometimes referred to as "ABS control") as will be described later. The WCYs 60, 61 are available to communicate with a low-pressure accumulator 70 through first and second pressure-reducing valves 68, 69 which are normally-closed shut-off valves. The first and second pressure-reducing valves 68, 69 operate to reduce WCY pressure by discharging hydraulic fluid from the WCYs 60, 61 to the low-pressure accumulator 70 for the purpose of conducting the ABS control.

A line 71 is provided for connecting the branch point A of the hydraulic fluid supply line 59 to the hydraulic fluid supply branches 59L, 59R with the low-pressure accumulator 70. Three check valves: fourth through sixth check valves 72, 73, and 74 are located in the line 71 in this order from the branch point A. Located between the fourth and fifth check valves 72 and 73 on the line 71 is a pump 75. The pump 75 sucks up hydraulic fluid through the line 71 at the fifth check valve 73 side and discharges it through the line 71 at the fourth check valve 72 side. A line 76 is provided for connecting the hydraulic fluid supply line 59 between the first output port 34 and the selector valve 62 with the line 71 between the fifth and sixth check valves 73 and 74. A normally-closed shut-off valve 77 is located in the line 76. In the line 59 between the first output port 34 and the selector valve 62, a first pressure sensor 78 is provided for detecting MCY pressure outputted through the first output port 34. In the line 71 between the branch point A and the fourth check valve 72, a second pressure sensor 79 is provided for detecting fluid pressure to be supplied to the WCYs 60, 61 which are intensified to be higher than the MCY pressure by the pump 75. The valves 62, 64, 65, 68, 69, and 77 in the first brake circuit connected to the first output port 34 are electromagnetic solenoid valves.

In the second brake circuit connected to the second output port 38 for supplying and discharging hydraulic fluid to WCYs 80, 81 of rear wheels RR, RL, identical valves, pumps, and pressure sensors to the first brake circuit are employed in the same manner, except the first pressure sensor 78. Such identical component parts are designated with the same reference numeral used in the first brake circuit, but are differentiated therefrom by means of additional marks "a", thus omitting the detail description of such component parts.

The pumps 75 and 75a of the first and second brake circuits are both driven by a motor M 82. The pressure sensors 78, 79, 79a are connected to a controller (not shown) to provide information of detected fluid pressure to the controller. Connected to the controller are a regenerative brake controller, a pedal travel sensor and/or a pedal force sensor for brake assist control, a ABS controller, and respective wheel-speed sensors of the wheels FR, FL, RR, and RL (these controllers are not shown) so that various information from the aforementioned controllers and sensors is inputted into the controller. The respective solenoid valves and the motor M are also connected to the controller.

The controller controls the selector valves 62, 62a and shut-off valves 77, 77a, based on fluid pressure information from the pressure sensors 78, 79, and 79a, operational information of regenerative brake coordination from the regenerative brake controller, operational information of service braking and operational information of brake assist control depending on pedal travel information from the pedal travel sensor or pedal force information from the pedal force sensor. That is, the controller controls the opening/closing operation of the shut-off valves 77, 77a and controls the drive of the motor M 82 i.e. the drive of the pumps 75, 75a for the service braking, the regenerative brake coordination, or the brake assist control. During operation in the service braking mode, during operation without the regenerative braking coordination, and during operation in brake assist control mode, the controller determines that increase in WCY pressure is required. In this case, the controller sets the selector valves 62, 62a to their relief-valve positions so as to intensify WCY pressure in a range not exceeding the relief threshold. During operation in the service braking mode and during operation in regenerative braking coordination mode, the controller determines that reduction in WCY pressure is required. In this case, the controller sets the selector valves 62, 62a to their communication positions so as to release WCY pressure to the MCY 1 side, thereby reducing WCY pressure.

The ABS controller controls the opening/closing of the pressure-intensifying valves 64, 65, 64a, 65a and the pressure-reducing valves 68, 69, 68a, 69a to conduct ABS control to a wheel which is in locking tendency when it is detected that the service braking is applied and the wheel is in locking tendency based on the operational information of service braking depending on pedal travel information from the pedal travel sensor or pedal force information from the pedal force sensor and the wheel-speed information form the respective wheel-speed sensors. That is, when it is determined that a wheel is in locking tendency and it is required to cancel the locking tendency of the wheel, the ABS controller closes the associated one of the pressure-intensifying valves 64, 65, 64a, 65a corresponding to the wheel in locking tendency. Further when it is determined that reduction in the WCY pressure of the wheel in the locking tendency is required, the ABS controller opens the associated one of the pressure-reducing valves 68, 69, 68a, 69a corresponding to the wheel in the locking tendency to discharge WCY pressure to the low-pressure accumulator 70, 70a to reduce the WCY pressure. When it is determined that reduction in the WCY pressure is no more required because the wheel speed of the wheel is recovered, the ABS controller closes the associated and opened pressure-reducing valve. Further when it is determined that increase in the WCY pressure is required because the wheel speed of the wheel is recovered to a predetermined speed, the ABS controller opens the pressure-intensifying valve corresponding to the wheel to intensify the WCY pressure. In such a manner, the ABS controller conducts the ABS control by controlling the opening/closing of the pressure-intensifying valves 64, 65, 64a, 65a and the pressure-reducing valves 68, 69, 68a, 69a.

The hydraulic fluid supply line 59L between the branch point A and the first pressure-intensifying valve 64 is connected to the control pressure inlet 44 through a braking force control pressure introduction line 83 so that WCY pressure $P_w$ discharged by the pump 75 is introduced as braking force control pressure $P_p$ into the control pressure chamber 40 through the braking force control pressure introduction line 83 and the control pressure inlet 44.

In the brake system of the fourth embodiment having the aforementioned structure, when vehicle is in a braking maneuver, the MCY 1 is activated so that MCY pressure is developed in the first and second MCY pressure chambers 32, 37. Since the servo ratio of the brake pressure intensifying device applying input to the MCY 1 is relatively small, the output is also relatively small. As a result, the MCY pressure developed is also relatively low. The MCY pressure is outputted through the first and second output ports 34, 38.

The MCY pressure outputted through the first output port 34 is detected by the first pressure sensor 78. Detected value is supplied to the controller. The controller sets the selector valves 62, 62a to their relief valve positions, opens the normally-closed shut-off valves 77, 77a, and drives the motor M 82. Therefore, the pumps 75, 75a are energized so as to suck up hydraulic fluid from the MCY 1 through the shut-off valves 77, 77a and discharge the fluid toward the branch points A, Aa. The hydraulic fluid discharged from the pumps 75, 75a is supplied to the respective wheel cylinders 60, 61, 80, 81 through the first and second pressure-intensifying valves 64, 64a, 65, 65a, thus braking the vehicle.

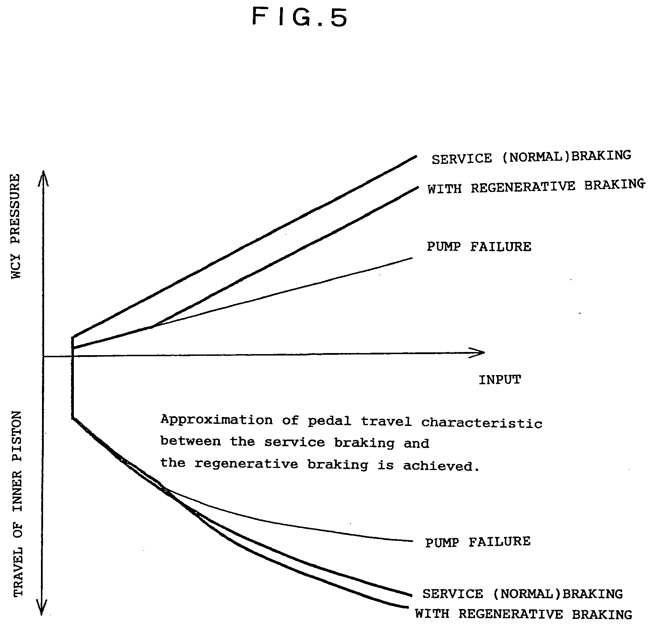

The controller determines whether the current operational mode is the service (normal) braking mode, the regenerative brake coordination mode, or the brake assist control mode, based on MCY pressure information from the first pressure sensor 78, WCY pressure information from the second pressure sensors 79, 79a, operational information of regenerative brake coordination from the regenerative brake controller, and operational information of brake assist control depending on pedal travel information from the pedal travel sensor or pedal force information from the pedal force sensor. Depending on the aforementioned determination, the controller controls the selector valves 62, 62a to obtain fluid pressure represented by one of brake characteristic curves with respective preset WCY pressure $P_w$. For example, the controller determines that the current operational mode is the service braking mode or the regenerative brake coordination mode, the controller controls the positions of the selector valves 62, 62a to obtain WCY pressure $P_w$ represented by the brake characteristic curve shown in Fig. 5 Therefore, braking force represented by the brake characteristic curve is obtained in accordance with the aforementioned determination. In addition, the WCY pressure $P_w$ thus obtained is introduced into the control pressure chamber 40 through the braking force control pressure introduction line 83 and the control pressure inlet 44. In the regenerative brake coordination mode as shown in Fig. 5, the travel of the inner piston 9 or the pedal travel is substantially equal to (approximates) the pedal travel in the service braking mode. In the brake assist control mode, not shown in Fig. 5, the brake characteristic is obtained in which the WCY pressure is greater than that in the service braking mode while the pedal travel in the brake assist control mode can be also controlled to be substantially equal to the pedal travel in the service braking mode.

The relief threshold of the relief valves of the selector valves 62, 62a is set to be higher than WCY pressure of any one of brake characteristic curves indicated in Fig. 5. Therefore, the hydraulic fluid discharged from the pumps 75, 75a never flow into the MCY 1 side through the relief valves of the selector valves 62, 62a, thereby preventing unnecessary pressure loss. This improves the accuracy of WCY pressure control. If the WCY pressure becomes higher than the relief threshold of the relief valves for some reason, the relief valves are opened to relieve pressure to control the WCY pressure to be lower than the relief threshold.

During a failure of the motor M 82 or the pump(s) 75, 75a, no pressure is intensified by the pump 75, 75a. Accordingly, the controller retains the selector valve(s) 62, 62a of at least the brake circuit affected by the failure in the communication position. As a result, MCY pressure developed depending on the forward movement of the primary inner piston 9 is directly transmitted to the WCYs, thereby securely actuating the wheel brakes of the brake circuit whenever a failure. The brake characteristic in this case is that the WCY pressure is smaller than that for service braking and the pedal travel is shorter than that for service braking because no pressure is intensified by the pump(s).

Though the brake pressure intensifying device is employed in the aforementioned fourth embodiment, the brake pressure intensifying device is not essential and may be omitted so that the primary inner piston 9 is directly operated with the pedal force on the brake pedal. In addition, while the MCY of the third embodiment can be employed as the MCY 1 of the fourth embodiment, the MCY 1 of the first or second embodiment can also be employed as the MCY of the fourth embodiment.

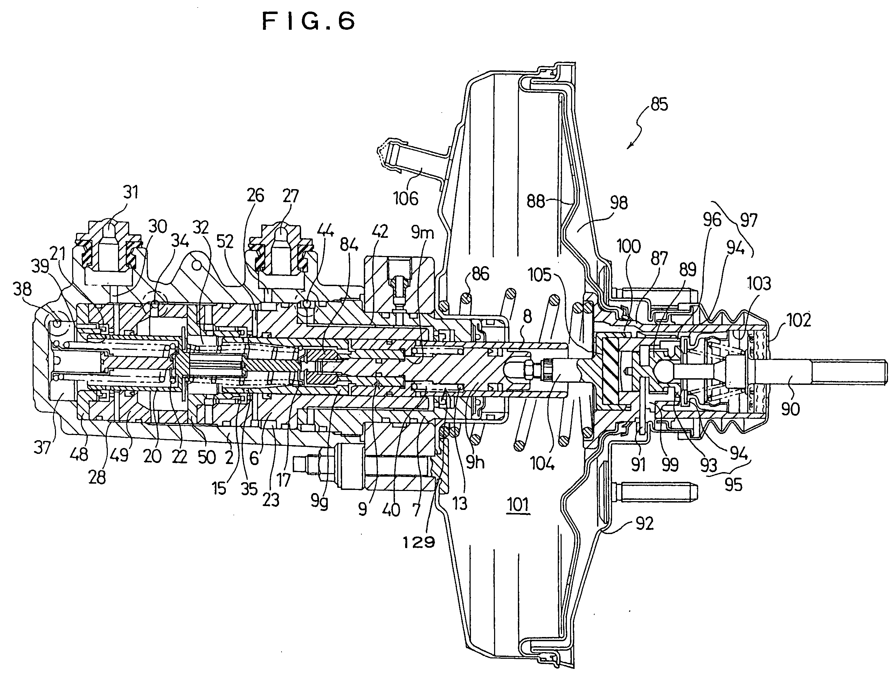

Fig. 6 is a sectional view showing a fifth embodiment of the present invention.

Differences between the MCY 1 of the fifth embodiment and the MCY 1 of the third embodiment are as follows. While the rear-side member 9h of the primary inner piston 9 is screwed into and connected to the front-side member 9g thereof in the MCY of the third embodiment, a front-side member 9g is formed in a cylindrical shape to have a bore therein and an front end portion of the rear-side member 9h is fluid-tightly passed through a rear end portion of the front-side member 9g to project into the bore of the front-side member 9g as shown in Fig. 6 in the fifth embodiment. In this state, a nut 84 is screwed and fixed to a portion of the rear-side member 9h so that the rear end portion of the front-side member 9g is sandwiched between the nut 84 and a peripheral step 9m of the front-side member 9g, whereby the front-side member 9g and the rear-side member 9h are integrally connected.

The construction of the MCY 1 of the fifth embodiment is otherwise substantially the same as that of the MCY 1 of the third embodiment.

Further, the MCY 1 of the fifth embodiment employs a vacuum booster 85 as the brake pressure intensifying device. The vacuum booster 85 has substantially the same construction as a typical conventional vacuum booster of a known type, but the preset servo ratio thereof is smaller than that of the typical conventional vacuum booster.

Since the vacuum booster 85 is substantially the same as a typical conventional vacuum booster, it will be briefly discussed.

When the vacuum booster 85 is inoperative as illustrated, a body 87, a diaphragm power piston 88, a valve plunger 89, and an input shaft 90 are in their rear-most positions because a key member 91 is in contact with a rear shell 92. In this state, a first valve seat 93 formed on the rear end of the valve plunger 89 is in contact with a valve body 94 so that an atmosphere valve 95 composed of the first valve seat 93 and the valve body 94 is closed. In addition, the valve body 94 is spaced apart form a second valve seat 96 formed in the body 87 so that a vacuum valve 97 composed of the second valve seat 96 and the valve body 94 is opened. Therefore, a variable pressure chamber 98 communicates with the constant pressure chamber 101 through a first passage 99 in the body 87, a space between the valve body 94 and the second valve seat 96, and a second passage 100 in the body 87 and is isolated from the atmosphere. Since negative pressure is always introduced into the constant pressure chamber 101, the variable pressure chamber 98 is at the same negative pressure as the constant pressure chamber 101.

As a brake pedal (not shown) is depressed under the above condition, the input shaft 90 moves forwards so that the valve body 94 is seated on the second valve seat 96 to close the vacuum valve 97, whereby the variable pressure chamber 98 is isolated from the constant pressure chamber 101. Further, the first valve seat 93 moves apart from the valve body 94 to open the atmosphere valve 95, whereby the variable pressure chamber 98 communicates with the atmosphere. Then, the atmosphere is introduced into the variable pressure chamber 98 through an atmosphere inlet 102, a bore 103 of the body 87, a space between the first valve seat 93 and the valve body 94, and the first passage 99 in the body 87, thereby producing pressure differential between the variable pressure chamber 98 and the constant pressure chamber 101. The diaphragm power piston 98 and the body 87 are moved forwards by the pressure differential, whereby the vacuum booster 85 outputs via an output shaft 104. By the output of the vacuum booster 85, the primary inner piston 9 of the MCY 1 is moved forward, so the MCY 1 develops MCY pressure as discussed above.

Reaction force is created by the output and is transmitted to the brake pedal via a reaction disc 105, the valve plunger 89, and the input shaft 90, whereby a driver can perceive the output of the vacuum booster 85. The vacuum booster 85 conducts a servo control so as to balance the input of the input shaft 90 with the reaction force. The output of the vacuum booster 85 corresponds to a magnitude obtained by intensifying the input at a preset servo ratio. Since the servo ratio of the vacuum booster is set smaller than that of a conventional vacuum booster, the output of the vacuum booster 85 is smaller than that required for obtaining normal braking force corresponding to the pedal force in the service braking mode.

As the brake pedal is released, the input shaft 90 moves backwards so that the first valve seat 93 comes in contact with the valve body 94 to close the atmosphere valve 95 while the valve body 94 moves apart from the second valve seat 96 to open the vacuum valve 97, whereby the variable pressure chamber 98 is isolated from the atmosphere and communicates with the constant pressure chamber 101. Then, the atmosphere introduced into the variable pressure chamber 98 is discharged to the constant pressure chamber 101 through the first passage 99 in the body 87, the space between the second valve seat 96 and the valve body 94, and the second passage 100 in the body 87 and, further discharged to a vacuum pressure source (not shown) through a vacuum pressure inlet 106 from the constant pressure chamber 101. In this manner, the variable pressure chamber 98 becomes at the same vacuum pressure as the constant pressure chamber 101, thus canceling the pressure differential between the chambers 98 and 101. As a result, the vacuum booster 85 no more outputs and becomes in the inoperative state as illustrated.

During a failure of the vacuum pressure source (pressure source) (not shown) of the vacuum booster 85, the valve plunger 89 is moved forward by the forward movement of the input shaft 90 and directly presses the output shaft 104 via the reaction disc 105. That is, the vacuum booster 85 outputs the input of the input shaft 90 without magnification. The primary inner piston 9 is operated by the output, thereby allowing the MCY 1 to securely develop MCY pressure whenever the vacuum pressure source fails.

The MCY 1 of the fifth embodiment is also connected to a brake system as shown in Fig. 4 described above, but not shown in Fig. 6. Therefore, as the MCY 1 of the fifth embodiment develop MCY pressure, the pumps 75, 75a are energized in the same manner as the brake system of the fourth embodiment, so as to intensifying the MCY pressure to control WCY pressure according to the current operating condition such as the service braking operation, the regenerative brake coordination, or the brake assist control. Then, the controlled WCY pressure is introduced into the control pressure chamber 40 of the MCY 1, whereby the pedal travel remains the same as in the service braking mode.

The MCY 1 of the fifth embodiment has an opening for taking braking force control pressure (wheel cylinder pressure) from the passage 42 connecting the control pressure chamber 40 and the control pressure inlet. The opening is provided, for example, for installation of a pressure sensor for detecting the braking force control pressure. When it is not required to take the braking force control pressure, the opening should be closed.

The construction, action, and effects of the brake system of the fifth embodiment are otherwise the same as those of the aforementioned embodiments.

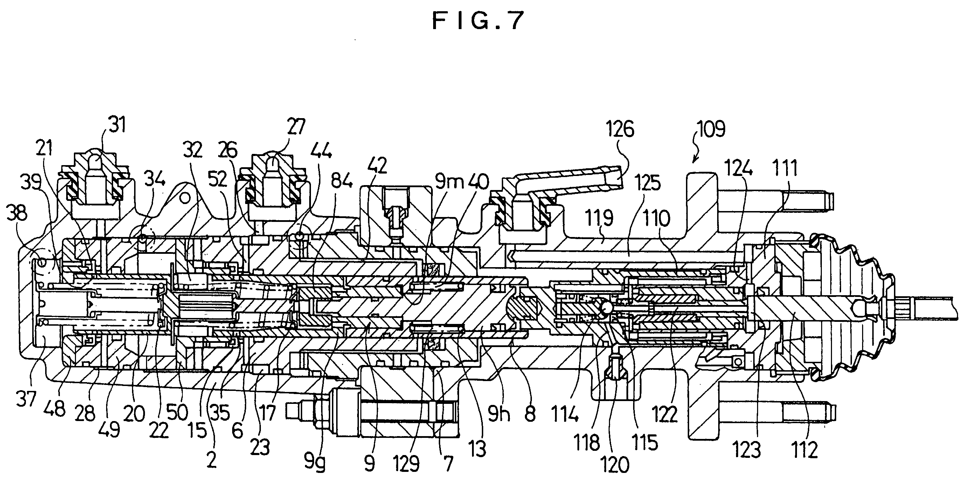

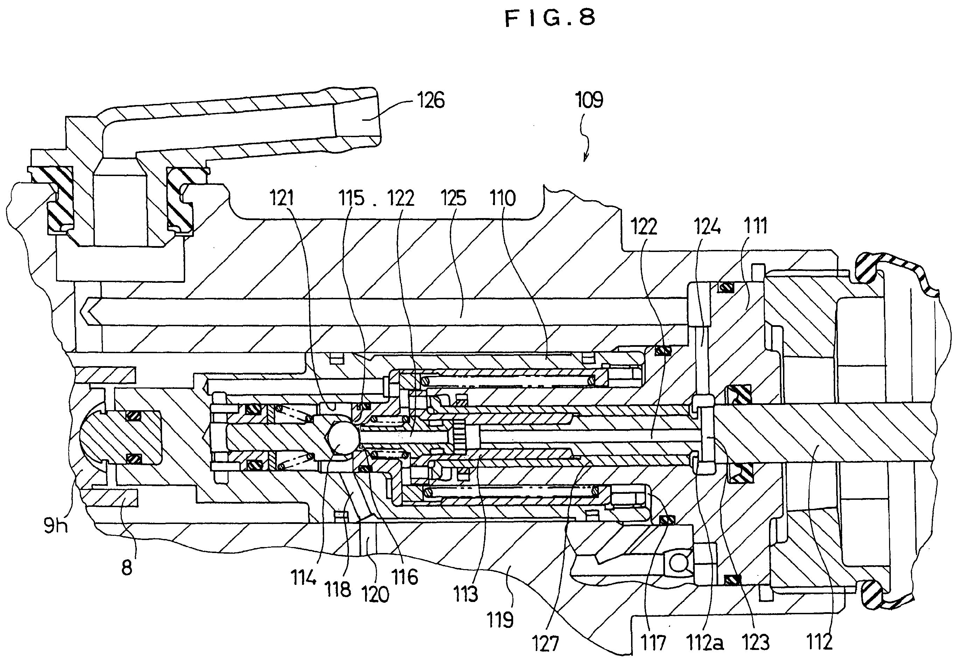

Fig. 7 is a sectional view showing a sixth embodiment of the present invention and Fig. 8 is a partially enlarged view of the sixth embodiment shown in Fig. 7.

While attached to the MCY 1 in the fifth embodiment is the vacuum booster *85,* attached to an MCY 1 in the sixth embodiment is a hydraulic booster 109. This hydraulic booster 109 has substantially the same construction as a typical conventional hydraulic booster, but the preset servo ratio thereof is smaller than that of the typical conventional hydraulic booster in the same manner as the vacuum booster 85 of the fifth embodiment.

Since the hydraulic booster 109 is substantially the same as a typical conventional hydraulic booster, it will be briefly discussed.

When the hydraulic booster 109 is inoperative as illustrated, the rear end of a power piston 110 is in contact with a plug member 111 by the spring force of the primary return spring 17 of the MCY 1 so that the power piston 110 is in the rear-most position, while a cylindrical member 113 fixed to a front end portion of an input shaft 112 is in contact with the plug member 111 so that the input shaft 112 is in the rear-most position. In this inoperative state, a valve body 114 provided in the power piston 110 is seated on a first valve seat 115 fixed to the power piston 110 and a second valve seat 116 fixed to the input shaft 112 is spaced apart from the valve body 114.

Therefore, a power chamber 117 is isolated from an axial bore 121 of the power piston 110. The axial bore 121 is always in communication with a fluid pressure source (not shown) through a radial hole 118 of the power piston 110 and a fluid pressure supply port 120 formed in a housing 119. The power chamber 117 communicates a reservoir (not shown) through a space between the valve body 114 and the second valve seat 116, an axial bore 122 and a radial hole 123 formed in the input shaft 112, a radial hole 124 formed in the plug member 111, an axial path 125 formed in the housing 119, and a fluid pressure discharge port 126 formed in the housing 119. Therefore, the power chamber 117 is at atmospheric pressure.

As a brake pedal (not shown) is depressed under the above condition, the input shaft 112 moves forwards so that the valve seat 116 comes in contact with the valve body 114 so as to isolate the power camber 117 from the axial bore 122 and the valve body 114 is spaced apart from the first valve seat 115. Then, fluid pressure always supplied to the axial bore 121 from the fluid pressure source is supplied to the power chamber 117 through a space between the valve body 114 and the first valve seat 115. The power piston 110 is moved forward by the fluid pressure, that is, the hydraulic booster 109 outputs. By the output of the hydraulic booster 109, the primary inner piston 9 of the MCY 1 is moved forwards, so the MCY 1 develops MCY pressure as discussed above. On the other hand, when the fluid pressure in the power chamber 117 reaches a predetermined value, the rear end of a reaction piston 127 comes in contact with a step 112a of the input shaft 112 so that reaction force is applied to the input shaft 112 through the reaction piston 127, thus performing jumping action. After that, the servo control is conducted such that the fluid pressure in the power chamber 117 depends on the input of the input shaft 112. The output of the hydraulic booster 109 corresponds to a magnitude obtained by intensifying the input of the input shaft 112 at a preset servo ratio. Since the servo ratio of the hydraulic booster is set smaller than that of a conventional hydraulic booster, the output of the hydraulic booster 109 is smaller than that required for obtaining normal braking force corresponding to the pedal force in the service braking mode.

As the brake pedal is released, the input shaft 112 moves backwards so that the valve body 114 is seated on the first valve seat 115 and the second valve seat 116 moves apart from the valve body 114 to isolate the power chamber 117 from the axial bore 121 and to allow the communication between the power chamber 117 and the axial bore 122. Then, the fluid pressure in the power chamber 117 is discharged to the reservoir, whereby the power piston 110 moves backwards. Finally, the power chamber 117 becomes at the atmospheric pressure so that the hydraulic booster 109 becomes in the inoperative state as illustrated.

During a failure of the hydraulic pressure source (pressure source) of the hydraulic booster 109, the valve body 114 is moved forward by the forward movement of the input shaft 112 via the second valve seat 116 and comes in contact with the power piston 110 so as to directly press the power piston 110. That is, the hydraulic booster 109 outputs the input of the input shaft 112 without magnification. The primary inner piston 9 is operated by the output, thereby allowing the MCY 1 to securely develop MCY pressure whenever the hydraulic pressure source fails.

The construction, action, and effects of the MCY 1 and the brake system of the sixth embodiment are otherwise the same as those of the fifth embodiment as discussed in connection with Fig. 6.

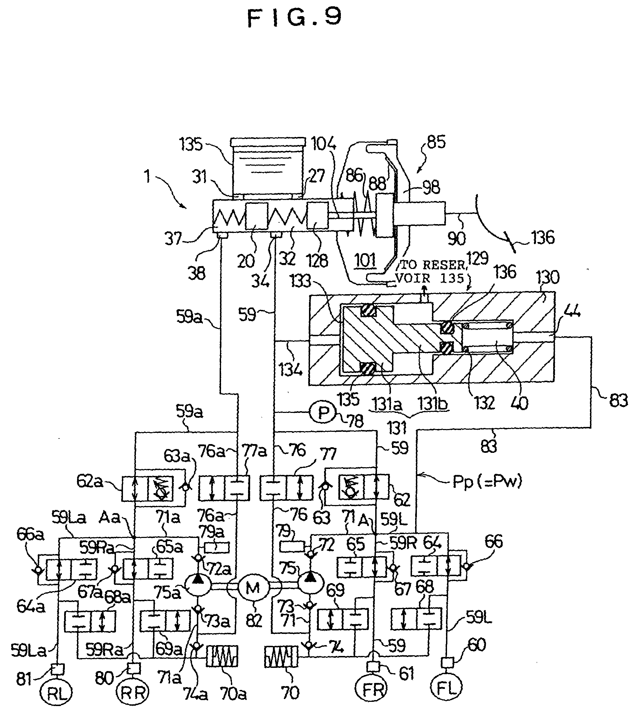

Fig. 9 is a view similar to Fig. 4, but showing a brake system of a seventh embodiment of the present invention.

In the MCY 1 of any of the aforementioned embodiments, the primary piston is composed of two members: the primary outer piston 8 and the primary inner piston 9 which are slidable to each other. In the MCY 1 of the seventh embodiment, however, as schematically illustrated in Fig. 9, a primary piston 128 composed of a single member just like a conventional tandem master cylinder of a know type. It should be noted that, in the inoperative state of the MCY 1, first and second MCY pressure chamber 32, 37 of the MCY 1 are allowed to communicate with a reservoir 135 through first and second reservoir connecting ports 27, 31 in the same manner as the conventional MCY or the MCY 1 of any of the aforementioned embodiments.

Further, in the MCY1 of any of the aforementioned embodiments, the control pressure chamber 40 of the pedal travel modulating device 129 is located inside the MCY 1 and coaxially with the primary outer piston 8 and the primary inner piston 9. In the MCY 1 of the seventh embodiment, however, a control pressure chamber 40 of a pedal travel modulating device 129 is located outside of the MCY 1 at a position out of the central axis of the primary piston 128.

The pedal travel modulating device 129 of the MCY 1 of the seventh embodiment comprises a housing 130 and a travel modulating piston 131 within the housing 130. The travel modulating piston 131 is a stepped piston composed of a large-diameter piston portion 131a formed on one side and a small-diameter piston portion 131b formed on the other side. The large- and small-diameter piston portions 131a, 131b are fluid-tightly and slidably disposed in a axial stepped bore (without reference numeral) of the housing 130 with O-rings 135, 136.

The housing 130 includes an MCY pressure introduction chamber 133 on the left side in Fig. 9 of the large-diameter piston portion 131a and the control pressure chamber 40 on the right side in Fig. 9 of the small-diameter piston portion 131b. The MCY pressure introduction chamber 133 is always in communication with the first MCY pressure chamber 32 through an MCY pressure introduction line 134, the hydraulic fluid supply line 59, and the first output port 34. That is, MCY pressure $P_m$ introduced into the MCY pressure introduction chamber 133 acts on the large-diameter piston portion 131a in the rightward direction. On the other hand, the control pressure chamber 40 is always in communication with the braking force control pressure introduction line 83 through the control pressure inlet 44 in the same manner as the aforementioned embodiments. That is, braking force control pressure $P_p$ (WCY pressure $P_w$) as pump discharge pressure introduced into the control pressure chamber 40 acts on the small-diameter piston 131b in the leftward direction.

The travel modulating piston 131 is always biased by the spring force of a control spring (corresponding to the biasing means of the present invention) 132 in the leftward direction i.e. opposite to the acting direction of the MCY pressure $P_m$. When the MCY 1 is inoperative, the left end of the travel modulating piston 131 is in contact with the housing 130 so that the travel modulating piston 131 is in the leftward-most position as illustrated.

The MCY 1 of the seventh embodiment is operated by a vacuum booster 85 with a low servo ratio just like the aforementioned fifth embodiment. That is, according to depression of a brake pedal 136, the input shaft 90 is moved in the leftward direction. Then, the vacuum booster 85 outputs via its output shaft 104 in the same manner as discussed above. The primary piston 128 of the MCY 1 is operated by the output.

In the same manner as the aforementioned forth embodiment, a controller determines whether the current operational mode is the service (normal) braking mode, the regenerative brake coordination mode, or the brake assist control mode, based on information from respective sensors. Depending on the aforementioned determination, the controller controls the selector valves 62, 62a with relief valves to obtain fluid pressure represented by one of brake characteristic curves with respective preset WCY pressure $P_w$. For example, the controller determines that the current operational mode is the service braking mode or the regenerative brake coordination mode, the controller controls the positions of the selector valves 62, 62a to obtain WCY pressure $P_w$ represented by the brake characteristic curve shown in Fig. 5. Therefore, braking force represented by the brake characteristic curve is obtained in accordance with the aforementioned determination.

During this, the MCY pressure $P_m$ of the first MCY pressure chamber 32 is introduced into the MCY pressure introduction chamber 133 of the pedal travel modulating device 129 through the first output port 34, the hydraulic fluid supply line 59, and the MCY pressure introduction line 134 and acts on the large-diameter piston portion 131a in the rightward direction. In addition, the braking force control pressure $P_p$ (WCY pressure $P_w$) is introduced into the control pressure chamber 40 through the braking force control pressure introduction line 83 and the control pressure inlet 44 and acts on the small-diameter piston portion 131b in the leftward direction. Accordingly, the travel modulating piston 131 travels in the rightward direction and is stopped at a position where force generated by the MCY pressure $P_m$, force generated by the braking force control pressure $P_p$, frictional force generated by seals on the large- and small-diameter piston portions 131a, 131b, and spring force of the control spring 132 are balanced. The hydraulic fluid is spent for the MCY 1 by an amount corresponding to the travel of the travel modulating piston 131.

An equilibrium-of-force expression for the travel modulating piston 131 during the operation of the MCY 1 of this seventh embodiment is as follows:

In the following expression, these terms will be utilized:

$A_1$ : sectional area (effective pressure receiving area) of the large-diameter piston portion 131a of the travel modulating piston 131;

$A_2$ : sectional area (effective pressure receiving area) of the small-diameter piston portion 131b of the travel modulating piston 131;

$F_s$ : spring force of the control spring 132

$f_6$ : frictional force of the large-diameter piston portion 131a of the travel modulating piston 131; and

$f_7$ : frictional force of the small-diameter piston portion 131b of the travel modulating piston 131.

Equilibrium-of-force expression of the travel modulating piston:

$$P_m \times A_1 = P_p \times A_2 + F_s + f_6 + f_7 \hspace{3cm} \text{Expression (9)}$$

As apparent from the Expression (9), in the MCY 1 of the seventh embodiment, under the same MCY pressure $P_m$, decrease in the braking force control pressure $P_p$ i.e. the WCY pressure $P_w$ leads to increase in the spring force $F_s$ of the control spring 132, that is increase in the rightward movement of the travel modulating piston 131. To the contrary, increase in the WCY pressure $P_w$ leads to decrease in the spring force $F_s$ of the control spring 132 i.e. decrease of the rightward travel of the travel modulating piston 131. This means that the pedal travel modulating device 129 of this embodiment controls in such a manner that, under the same MCY pressure $P_m$, the amount of hydraulic fluid to be spent for the MCY 1 is increased as the WCY pressure Pw drops and the amount of hydraulic fluid to be spent is reduced as the WCY pressure Pw rises.

On the other hand, when the regenerative braking coordination is not conducted i.e. in the service braking mode, the pumps 75, 75a are energized to increase WCY pressure $P_w$ to obtain desired normal braking force. In the service braking mode, the servo ratio is larger because of the operation of the pumps. Though the WCY pressure Pw is increased by the operation of the pumps 75, 75a also in the regenerative brake coordination mode, the WCY pressure $P_w$ is increased into a magnitude wherein the magnitude is smaller than that in the service braking mode by an amount of braking force generated by the regenerative brake system. In the regenerative brake coordination mode, the servo ratio is small because of the operation of the pumps.

In the service braking mode, the amount of hydraulic fluid to be spent for the WCYs 60, 61, 80, 81 is increased because the WCY pressure $P_w$ is increased. Since the WCY pressure $P_w$ is increased, the amount of hydraulic fluid of the MCY 1 to be spent by the pedal travel modulating device 129 is relatively small. Accordingly, the resultant amount of hydraulic fluid to be spent for the entire system becomes the preset amount. In the regenerative brake coordination mode, the amount of hydraulic fluid to be spent for the WCYs 60, 61, 80, 81 is reduced because the WCY pressure $P_w$ is reduced. Since the WCY pressure $P_w$ is reduced, the amount of hydraulic fluid of the MCY 1 to be spent by the pedal travel modulating device 129 is relatively large. Accordingly, the resultant amount of hydraulic fluid to be spent for the entire system remains substantially the same as in the service braking mode. Therefore, the travel of the primary piston 128 of the MCY 1 or the pedal travel in the regenerative brake coordination mode is substantially equal to (approximates) the pedal travel in the service braking mode. That is, the pedal travel is little different between the service braking mode and the regenerative brake coordination mode.

In the brake assist control mode, not shown in Fig. 5, a brake characteristic can be obtained in which the WCY pressure is greater than that in the service braking mode. The pedal travel in the brake assist control mode is also controlled to be substantially equal to the pedal travel in the service braking mode.

The housing 130 of the pedal travel modulating device 129 of the seventh embodiment may be utilized also as the housing 2 of the MCY 1. That is, the pedal travel modulating device 129 may be structured such that the travel modulating piston 131 is located in the housing 2 of the MCY 1 at a position out of the central axis of the primary piston 128.

The construction of the MCY 1 and the brake system of the seventh embodiment is otherwise the same as the fourth embodiment.

The pedal travel modulating device 129 of the seventh embodiment having the aforementioned construction can exhibit the following effects as compare to the aforementioned embodiments.

In any of the aforementioned embodiments, the primary outer piston 8 is affected by frictional force $f_2$, $f_3$, and $f_4$ at three locations as apparent from Expression (4) or is affected by frictional force $f_2$, $f_3$, $f_4$, and $f_5$ at four locations as apparent from Expression (8). In the MCY of the seventh embodiment, however, the travel modulating piston 131 is affected only by frictional force $f_6$ and $f_7$ at two locations as apparent from Expression (9). Therefore, the number of locations of frictional force in the pedal travel modulating device 129 of the seventh embodiment is reduced as compared to the aforementioned embodiments, whereby the accuracy of travel control by the pedal travel modulating device 129 of the seventh embodiment is improved as compared to the aforementioned embodiments.

Since the pedal travel modulating device 129 of the seventh embodiment is located outside of the MCY 1 at a position out of the central axis of the primary piston 128, the construction of the pedal travel modulating device 129 is simple as compared to the pedal travel modulating device 129 which is located in the MCY 1 coaxially with the primary inner piston 9 of the aforementioned embodiments, thereby simplifying the construction, improving the assembly work, and reducing the cost involved.

The action of the MCY 1 and the brake system of the seventh embodiment and the effects of the pedal travel modulating device 129 are otherwise the same as those of the fourth embodiment.

Though the vacuum booster 85 is employed as a brake pressure intensifying device in the seventh embodiment, a hydraulic booster 109 as discussed above may be employed or alternatively the brake pressure intensifying device may be omitted.

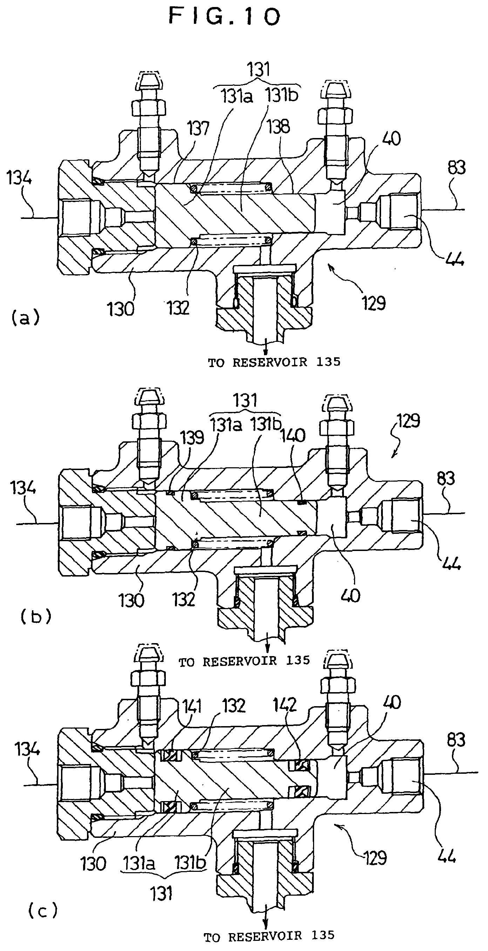

Figs. 10(a) through 10(c) are sectional views showing pedal travel modulating devices 129 of eighth through tenth embodiments of the present invention, respectively.

In the pedal travel modulating device 129 of the aforementioned seventh embodiment, two O-rings 135, 136 are used to maintain the fluid-tight state between the travel modulating piston 131 and the inner surface of the axial bore of the housing 130. In a pedal travel modulating device 129 of the eighth embodiment, however, as shown in Fig. 10(a), metal seals 137, 136 are formed to maintain the fluid-tight state between large- and small-diameter piston portions 131a, 131b of a travel modulating piston 131 and the inner surface of an axial bore of a housing 130, respectively.

In the eighth embodiment, the pedal travel modulating device 129 includes a spring 132 disposed in a compressed state between a step between the large- and small-diameter piston portions 131a, 131b of the travel modulating piston 131 and the housing 130.

According to the structure of the pedal travel modulating device 129 of the eighth embodiment, the frictional force can be reduced as compared to the frictional force generated by the O-rings 135, 136 of the seventh embodiment and the number of parts can be reduced. However, it is difficult to ensure the fluid tightness in the pedal travel modulating device 129 of the eighth embodiment as compare to the seventh embodiment. To ensure the fluid tightness, the sliding surface of the axial bore of the housing 130 and the sliding surfaces of the large- and small-diameter piston portions 131a, 131b are required to be finished with high accuracy.

The construction, action, and effects of the pedal travel modulating device 129 of the eighth embodiment are otherwise the same as those of the seventh embodiment. In addition, the construction of the MCY 1 of the eight embodiment, the construction, action, and effects of the brake system of the eight embodiment are otherwise the same as those of the seventh embodiment.

In a pedal travel modulating device 129 of the ninth embodiment, as shown in Fig. 10(b), seal rings 139, 140 made of Teflon or the like are provided in large- and small-diameter piston portions 131a, 131b of a travel modulating piston 131, respectively, to maintain the fluid-tight state between the large- and small-diameter piston portions 131a, 131b and the inner surface of an axial bore of the housing 130.

According to the structure of the pedal travel modulating device 129 of the ninth embodiment, the fluid tightness can be increased as compared to the case employing the metal seals 137, 138 of the eighth embodiment. However, the frictional force is never smaller than that of the eighth embodiment.

The construction, action, and effects of the pedal travel modulating device 129 of the ninth embodiment are otherwise the same as those of the eighth embodiment. In addition, the construction of the MCY 1 of the ninth embodiment, the construction, action, and effects of the brake system of the ninth embodiment are otherwise the same as those of the eighth embodiment.

In a pedal travel modulating device 129 of the tenth embodiment, as shown in Fig. 10(c), cup seals 141, 142 made of rubber are provided in large- and small-diameter piston portions 131a, 131b of a travel modulating piston 131, respectively, to maintain the fluid-tight state between the large- and small-diameter piston portions 131a, 131b and the inner surface of an axial bore of the housing 130.

According to the structure of the pedal travel modulating device 129 of the tenth embodiment, the fluid tightness can be increased as compared to the case employing the seal rings 139, 140 of the ninth embodiment. However, the frictional force is never smaller than that of the ninth embodiment.

The construction, action, and effects of the pedal travel modulating device 129 of the tenth embodiment are otherwise the same as those of the ninth embodiment. In addition, the construction of the MCY 1 of the tenth embodiment, the construction, action, and effects of the brake system of the tenth embodiment are otherwise the same as those of the ninth embodiment.

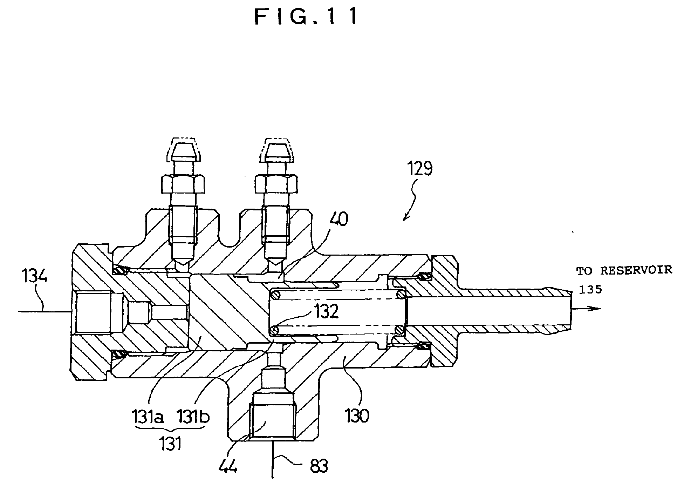

Fig. 11 is a sectional view showing a pedal travel modulating device 129 of a eleventh embodiment of the present invention.

In the pedal travel modulating device 129 of the aforementioned seventh embodiment, the braking force control pressure $P_p$ (WCY pressure $P_w$) is applied to the small-diameter piston portion 131b of the travel modulating piston 131. In the pedal travel modulating device 129 of the eleventh embodiment, however, the braking force control pressure $P_p$ (WCY pressure $P_w$) is applied to a step between large- and small-diameter piston portions 131a and 131b of a travel modulating piston 131 as shown in Fig. 11. That is, a control pressure chamber 40 is formed in an annular shape defined by the step, the outer periphery of the small-diameter piston 131b, and the housing 130.

In the above seventh though tenth embodiments, leakage to the reservoir should be prevented at two locations on the large-diameter piston portion 131a and on the small-diameter piston portion 131b of the travel modulating piston 131. Compared to this, in the pedal travel modulating device 129 of the eleventh embodiment, there is only one location on the small-diameter piston portion 131b where leakage should be prevented, thereby improving the fluid tightness.

The construction, action, and effects of the pedal travel modulating device 129 of the eleventh embodiment are otherwise the same as those of the eighth embodiment. In addition, the construction of the MCY 1 of the eleventh embodiment, the construction, action, and effects of the brake system of the eleventh embodiment are otherwise the same as those of the eighth embodiment.

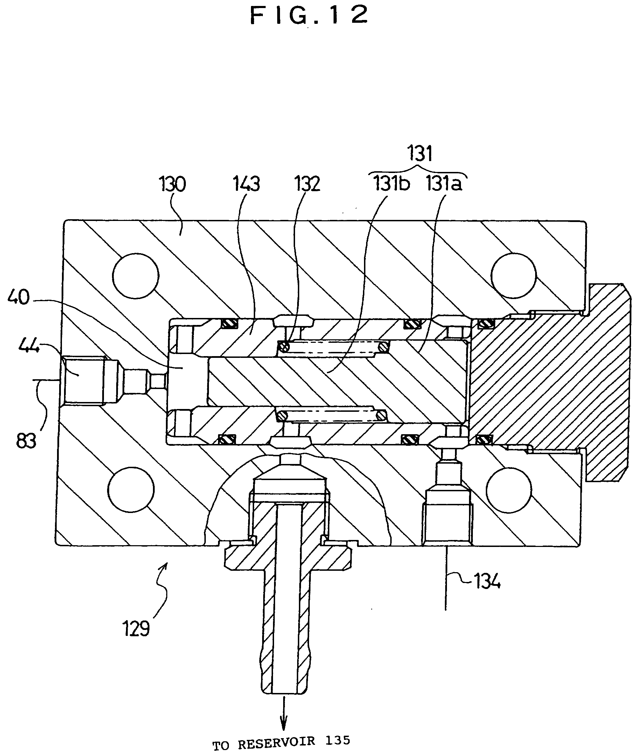

Fig. 12 is a sectional view of a pedal travel modulating device 129 of a twelfth embodiment of the present invention.

In the pedal travel modulating device 129 of the eighth embodiment, the travel modulating piston 131 is designed to slide directly on the inner surface of the axial bore of the housing 130 as shown in Fig. 10(a). In the twelfth embodiment, however, the pedal travel modulating device 129 includes a cylinder member 143 which is a separate member from a housing 130 and is fitted in the axial bore of the housing 130 so that large- and small-diameter piston portions 131a, 131b of a travel modulating piston 131 are fluid-tightly and slidably received in an axial bore of the cylinder member 143.

In the pedal travel modulating device 129 of the twelfth embodiment having the aforementioned construction, portions on which the travel modulating piston 131 slide are formed by the cylinder member 143 separated from the housing 130, thereby more accurately and easily finishing the sliding surfaces. Therefore, in workability and cost effect, the pedal travel modulating device 129 of the twelfth embodiment is superior to the pedal travel modulating devices 129 of the ninth through eleventh embodiments.

The construction, action, and effects of the pedal travel modulating device 129 of the twelfth embodiment are otherwise the same as those of the eighth embodiment. In addition, the construction of the MCY 1 of the twelfth embodiment, the construction, action, and effects of the brake system of the twelfth embodiment are otherwise the same as those of the eighth embodiment.

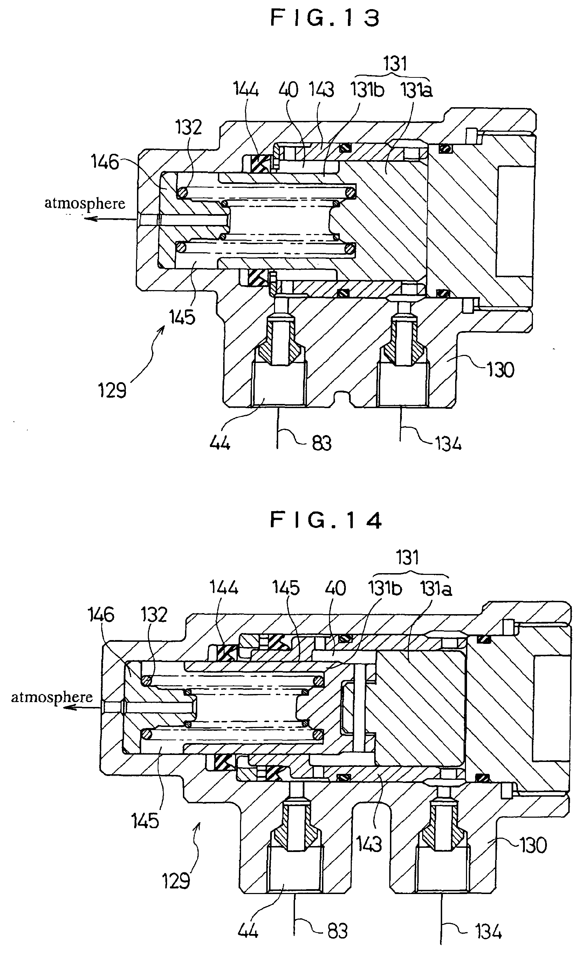

Fig. 13 is a pedal travel modulating device 129 of a thirteenth embodiment of the present invention.

In the aforementioned twelfth embodiment, the large- and small-diameter piston portions 131a, 131b of the travel modulating piston 131 are both fluid-tightly and slidably received in the cylinder member 143 fitted in the axial bore of the housing 130. In the pedal travel modulating device 129 of the thirteenth embodiment, however, a small-diameter piston portion 131b of a travel modulating piston 131 is fluid-tightly and slidably received in the axial bore of a housing 130, while a large-diameter piston portion 131a of the travel modulating piston 131 is fluid-tightly and slidably received in a cylinder member 143 fitted in the axial bore of the housing 130 as shown in Fig. 13.

In the eleventh and twelfth embodiments, the fluid tightness between the large- and small-diameter piston portions 131a, 131b and the inner surfaces on which their outer peripheries slide is maintained by metal seals. In the thirteenth embodiment, the fluid tightness between the outer surface of the large-diameter piston portion 131a and the inner surface of the axial bore of the cylinder member 143 is maintained by metal seal, while the fluid tightness between the outer surface of the small-diameter piston portion 131b and the inner surface of the axial bore of the housing 130 is maintained by a cup seal 144 made of an elastic material. The control pressure chamber 40 is defined by the metal seal and the cup seal 144.

While the chamber accommodating the spring 132 is in communication with the reservoir 135 in the aforementioned eleventh embodiment, a spring chamber 145 accommodating a spring 132 is in communication with the atmosphere.

In the spring chamber 145, a spring receiving member 146 is provided. Therefore, only by replacing the spring 132 and the spring receiving member 146 with another ones, the characteristic of the pedal travel modulating device 129 can be variously and freely changed.

In the pedal travel modulating device 129 of the thirteenth embodiment having the above construction, the fluid tightness between the outer surface of the small-diameter piston portion 131b and the inner surface of the axial bore of the housing 130 is maintained by the cup seal 144, thereby securely preventing the fluid leakage from the control pressure chamber 40 as compared to a case of metal seal. In the in-line type in which hydraulic fluid in the first MCY pressure chamber 32 is supplied to the control pressure chamber 40, when fluid leakage is caused in the control pressure chamber 40, the amount of hydraulic fluid to be spent from the first MCY chamber 32 is increased by an amount corresponding to the fluid leakage. According to this embodiment, since the fluid leakage from the control pressure chamber 40 can be prevented as mentioned above, increase in the amount of hydraulic fluid to be spent from the first MCY pressure chamber 32 can be prevented, thereby preventing increase in the travel of the primary piston 9 of the MCY 1 and thus preventing increase in the pedal travel.

In the pedal travel modulating device 129 of the thirteenth embodiment, the frictional force of the travel modulating piston 131 is slightly increased because of the cup seal 144. However, the frictional force is smaller than that of a case in which the travel modulating piston 131 is included in the MCY 1, because of reduced number of cup seals.

The construction, action, and effects of the pedal travel modulating device 129 of the thirteenth embodiment are otherwise the same as those of the eleventh embodiment. In addition, the construction of the MCY 1 of the thirteenth embodiment, the construction, action, and effects of the brake system of the thirteenth embodiment are otherwise the same as those of the eighth embodiment.

Fig. 14 is a sectional view showing a pedal travel modulating device 129 of a fourteenth embodiment of the present invention.

In the thirteenth embodiment, the small-diameter piston portion 131b of the travel modulating piston 131 is fluid-tightly and slidably received only in the axial bore of the housing 130. In the pedal travel modulating device 129 of the fourteenth embodiment, however, a small-diameter piston portion 131b is fluid-tightly and slidably received both in the axial bore of a housing 130 and in the axial bore of a cylinder member 143.

Further, in the thirteenth embodiment, the small-piston portion 131b is sealed only by the cup seal 144 from the axial bore of the housing 130. In the pedal travel modulating device 129 of the fourteenth embodiment, however, the small-diameter piston portion 131b is sealed by a cup seal 144 from the axial bore of the housing 130 and sealed by metal seal 145 from the axial bore of the cylinder member 143. In the fourteenth embodiment, the control pressure chamber 40 is defined by the metal seal on the large-diameter piston portion 131a and the metal seal 145.

In the pedal travel modulating device 129 of the fourteenth embodiment having the above construction, fluid leaking from the control pressure chamber 40 through the metal seal 145 acts on the cup seal 144. At this point, however, the pressure of the fluid acting on the cup seal 144 is lowered as compared to the thirteenth embodiment because the fluid already passed through the metal seal 145. The frictional force by the cup seal 144 of the travel modulating piston 131 can be small.

The construction, action, and effects of the pedal travel modulating device 129 of the fourteenth embodiment are otherwise the same as those of the thirteenth embodiment. In addition, the construction of the MCY 1 of the fourteenth embodiment, the construction, action, and effects of the brake system of the fourteenth embodiment are otherwise the same as those of the eighth embodiment.

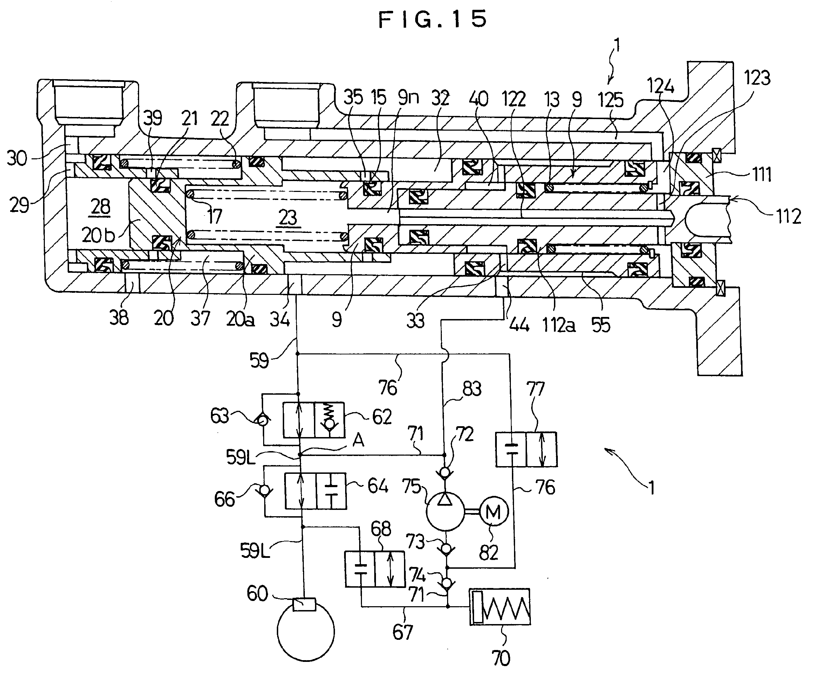

Fig. 15 is a sectional view similar to Fig. 4, but showing a fifteenth embodiment of the present invention.

The MCY 1 and the brake system of the fifteenth embodiment are of the in-line type, just like the earlier embodiments, in which hydraulic fluid in a first MCY pressure chamber 32 is discharged by a pump, thus pump discharge pressure is controlled by a pressure control valve according to the pedal force or pedal travel, and the controlled discharged pressure is supplied to a control pressure chamber 40 in the MCY1 and respective wheel cylinders 60, 61.

The MCY 1 of the fifteenth embodiment will be described in detail. As shown in Fig. 15, the MCY 1 of the fifteenth embodiment has a cylindrical primary piston 9, corresponding to and instead of the primary outer piston 9 of the MCY 1 of the third embodiment shown in Fig. 4. The primary piston 9 is fluid-tightly and slidably received in the axial bore of a housing 2. The MCY 1 also has an input shaft 112 identical with the input shaft 112 of the MCY 1 of the sixth embodiment shown in Fig. 7. The input shaft 112 is fluid-tightly inserted into an axial bore of the primary piston 9 from the outside of the housing 2 in such a manner as to allow the relative movement between the input shaft 112 and the primary piston 9. The MCY 1 still has a control spring 13 identical with the control spring 13 of the third embodiment which is disposed in a compressed state between the primary piston 9 and the input shaft 112.

Formed between the primary piston 9 and a secondary piston 20 is a first atmospheric pressure chamber 23 which is always in communication with a reservoir 135 (see Fig. 9) through a small-diameter bore 9n of the primary piston 9, an axial bore 122 and a radial hole 123 formed in the input shaft 112, a space 124 between the primary piston 9 and a plug member 111, and a passage 125 of the housing 2.

The control pressure chamber 40 of the fifteenth embodiment is located at a front portion of the input shaft 112 and formed between the inner periphery of the axial bore of the primary piston 9 and the outer periphery of the input shaft 112. The control pressure chamber 40 is always in communication with a control pressure inlet 44 through radial holes 33 and an annular gap 55 formed in the primary piston 9.

In the MCY 1 of the fifteenth embodiment, input W and the spring force of the control spring 13 both act on the input shaft 112 in the same direction, while wheel cylinder pressure Pw also acts on the input shaft 112 against the input W and the spring force of the control spring 13. The wheel cylinder pressure Pw is controlled in such a manner that the force by the wheel cylinder pressure Pw, the frictional force of the input shaft 112, the input W, and the spring force of the control spring 13 are balanced.

The construction of the MCY 1 and the brake system of the fifteenth embodiment is otherwise the same as those of the fourth embodiment shown in Fig. 4.

The equilibrium-of-force expression for the input shaft 112 during the operation of the MCY 1 of the fifteenth embodiment is as follows.

In the following expression, these terms will be utilized:

W : input applied to the input shaft 112;

$P_m$ : MCY pressure of the first MCY pressure chamber 32;

$P_p$ : fluid pressure of the control pressure chamber 40 (pump discharge pressure = WCY pressure $P_w$);

$A_3$ : effective pressure receiving area of a large-diameter portion 112a of the input shaft 112 and effective pressure receiving area of the primary piston 9 where receive the pump discharge pressure $P_p$;

$A_4$ : effective pressure receiving area of the primary piston 9 where receives the MCY pressure $P_m$;

$F_{s1}$ : setting load of the control spring 13;

$F_{s2}$ : spring force of a first return spring 17 of the primary piston 9;

$K_1$ : spring constant of the control spring 13;

L : relative movement between the primary piston 9 and the input shaft 112;

$f_8$ : frictional force of the input shaft 112; and

$f_9$ : frictional force of the primary piston 9.

Since the force acting on the input shaft 112 by the pump discharge pressure $P_p$ and the frictional force $f_8$ of the input shaft 112 are controlled to be balanced with the input W and the spring force ($F_{s1} + K_1 \cdot L$) of the control spring 13, the equilibrium-of-force expression of the input shaft 112 is:

$$W = P_p \cdot A_3 - (F_{s1} + K_1 \cdot L) + f_8 \qquad \text{Expression (10)}$$

from Expression (10), the following expressions are established:

$$L = (P_p \cdot A_3 - W - F_{s1} + f_8) / K_1 \qquad \text{Expression (11)}$$

$$P_p = (W + F_{s1} + K_1 \cdot L - f_8) / A_3 \qquad \text{Expression (12)}$$

Since the force acting on the primary piston 9 by the pump discharge pressure $P_p$ is controlled to be balanced with the force acting on the primary piston 9 by the master cylinder pressure $P_m$, the spring force ($F_{s1} + K_1 \cdot L$) of the control spring 13, the spring force $F_{s2}$ of the first return spring 17, and the frictional force $f_9$ of the primary piston 9, the equilibrium-of-force expression for the primary piston 9 is:

$$P_p \cdot A_3 = P_m \cdot A_4 + F_{s1} + K_1 \cdot L + F_{s2} + f_9 \qquad \text{Expression (13)}$$

Further, from Expressions (12) and (13), the following expression is established:

$$P_m \cdot A_4 = W - F_{s1} - f_8 - f_9 \qquad \text{Expression (14)}$$

As apparent from Expression (11), similar to the aforementioned embodiments, the relative movement L increases in response to increase in the pump discharge pressure $P_p$ i.e. the WCY $P_w$ so that the travel of the input shaft 112 is reduced relative to the travel of the primary piston 9 according to the pump discharge pressure $P_p$ (by an amount corresponding to the relative movement L depending on the pump discharge pressure). The greater the pump discharge pressure $P_p$, the greater the relative movement L so that the greater the pump discharge pressure $P_p$, the greater the rate of shortening the travel $S_i$ of the input shaft 112.

Therefore, the control of the pedal travel in the service braking mode and the regenerative brake coordination mode is as follows.

In the service braking mode where the regenerative brake coordination is not conducted, greater wheel cylinder pressure $P_w$ is obtained, that is, greater pump discharge pressure $P_p$ is obtained so that the ratio of shortening the travel of the input shaft 112 is greater. In this case, the travel of the input shaft 112 is effectively shortened. That is, in the service braking mode, the pedal travel is effectively shortened.

In the regenerative brake coordination mode, the pump discharge pressure $P_p$ is controlled to be reduced to reduce the wheel cylinder pressure $P_w$ such that the braking force generated by the pump discharge pressure $P_p$ is reduced by an amount corresponding to the braking force generated by the regenerative brake system. During this, hydraulic fluid in the respective wheel cylinders 60, 61; 80, 81 is returned to the first and second MCY pressure chambers 32, 37, whereby the travel of the primary piston 9 and the travel of the secondary piston 20 are reduced. Since the pump discharge pressure $P_p$ is controlled to be reduced, the travel of the input shaft 112 is reduced. As a result, the pedal travel in the regenerative brake coordination mode remains substantially the same as in the service braking mode.

As discussed above, the pedal travel in the service braking mode and the pedal travel in the regenerative brake coordination mode are substantially identical.

As apparent from Expression (14), since the MCY pressure $P_m$ is determined by the input W of the input shaft 112, the pedal force in the service braking mode and the regenerative brake coordination mode also remains the same whenever the wheel cylinder pressure Pw is varied.

In this manner, in the MCY 1 of the fifteenth embodiment, the vehicle deceleration (or braking force) relative to the pedal force and the pedal travel are substantially identical regardless of whether or not the regenerative brake coordination is conducted.

In the service braking mode, since the pump discharge pressure $P_p$ is controlled to be greater to obtain greater wheel cylinder pressure $P_w$, the pedal travel is shortened at a relatively greater rate as discussed above.

On the other hand, in the regenerative brake coordination mode, the controller controls the first pressure intensifying valve 64 according to PWM control to reduce the pump-discharge pressure $P_p$ and the wheel cylinder pressure $P_w$ to be smaller than those in the service braking mode by an amount corresponding to the braking force generated by the operation of the regenerative brake coordination. Accordingly, in the regenerative brake coordination, the braking force generated by the respective wheel cylinders 60, 61; 80, 81 is also reduced by the corresponding amount. The resultant braking force is the total of the regenerative braking force and the braking force generated by the MCY pressure $P_m$ and is substantially equal to the braking force in the service braking mode. During this, since MCY pressure $P_m$ is determined by the input W of the input shaft 112, the pedal force is not varied whenever the wheel cylinder pressure $P_w$ is changed. The pedal travel in this regenerative brake coordination mode remains the same as in the service braking mode.

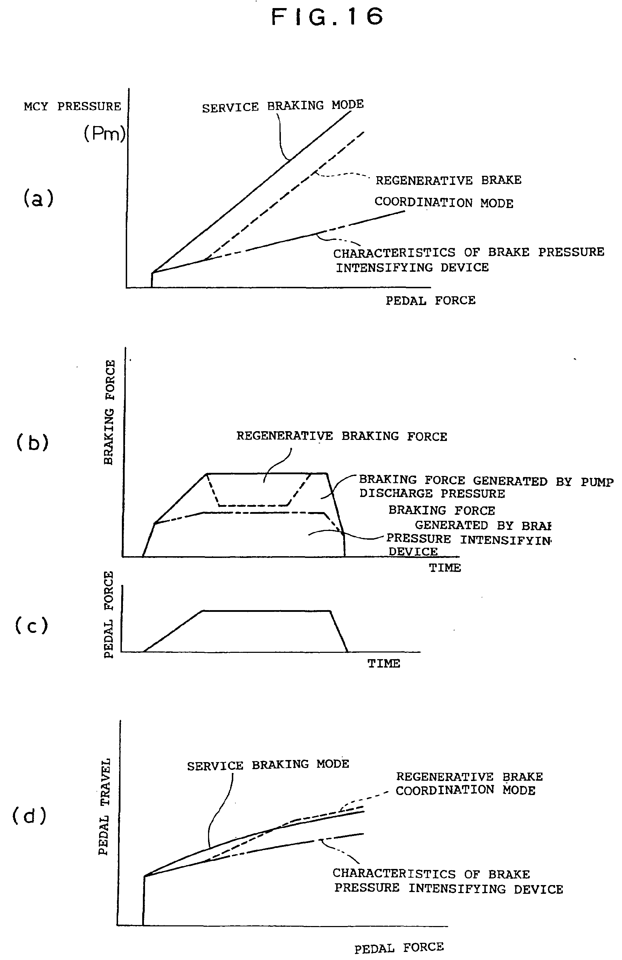

In the master cylinder 1 of the fifteenth embodiment, the pedal force versus MCY pressure characteristic in the service braking mode is represented by a solid line in Fig. 16(a) in which greater MCY pressure $P_m$ is obtained relative to the same pedal force because the master cylinder develops greater MCY pressure $P_m$ in the service braking mode. On the other hand, the pedal force versus MCY pressure characteristic in the regenerative brake coordination mode is represented by a dotted line in Fig. 16(a) in which smaller MCY pressure $P_m$ is obtained relative to the same pedal force because the master cylinder develops smaller MCY pressure $P_m$ controlled by delayed shifting timing of the pressure control valve 47.

Therefore, the total braking force versus pedal force (the pedal force is indicated in Fig. 16(c)) is represented by a solid line in Fig. 16(b). The braking force generated by the pump discharge pressure in the service braking mode accounts for a portion of the total braking force except the braking force generated by the output of the brake pressure intensifying device. The braking force generated by the pump discharge pressure in the regenerative brake coordination mode accounts for a portion (defined by dotted lines) of the total braking force except the braking force generated by the output of the brake pressure intensifying device and the braking force generated by the regenerative brake coordination. That is, the braking force generated by the pump discharge pressure in the regenerative brake coordination mode is smaller than that in the service braking mode by an amount of the braking force generated by the regenerative brake coordination.

In the pressure intensifying master cylinder 1 of the fifteenth embodiment, the pedal force versus pedal travel characteristic in the service braking mode is represented by a relatively gentle curve as indicated by a solid line in Fig. 16(d) because the pedal travel is shortened at increased rate as the travel of the primary piston 9 increases in the service braking mode. The pedal force versus pedal travel characteristic in the regenerative brake coordination mode is represented by a relatively gentle curve as indicated by a dotted line in Fig. 16(d) that is similar to that in the service braking mode because while the MCY pressure is small and the travel of the primary piston 9 is small, the rate of shortening the pedal travel relative to the travel of the primary piston 9 is set small. There is little change in the pedal force versus pedal travel characteristic between the service braking mode and the regenerative brake coordination mode. This means that the pedal force versus pedal travel characteristic remains substantially the same.

The action and effects of the fifteenth embodiment are substantially the same as those of the fourth embodiment shown in Fig. 4.

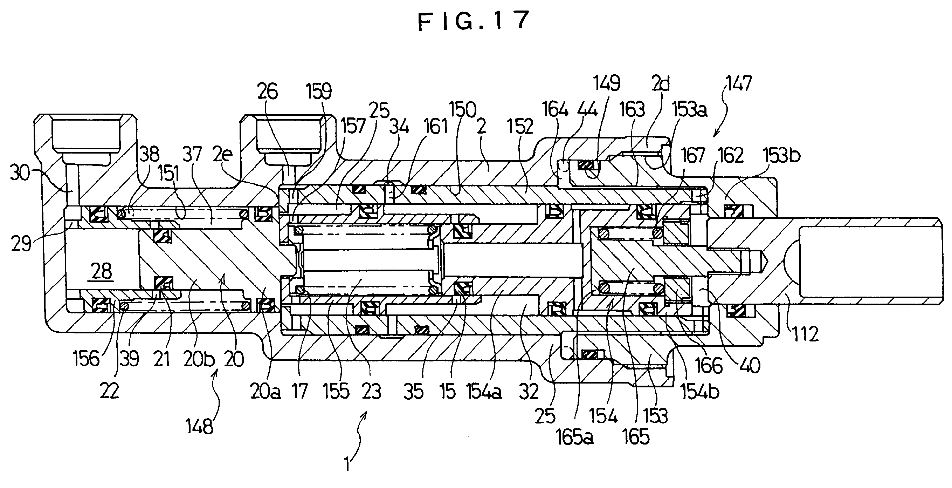

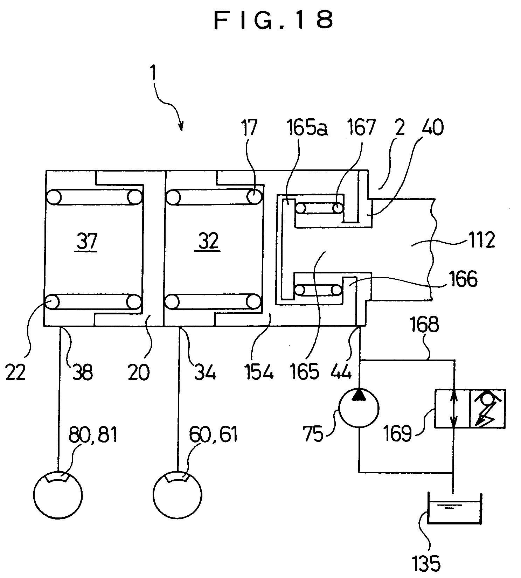

Fig. 17 is a sectional view similar to Fig. 1 but showing a sixteenth embodiment of the present invention and Fig. 18 is a schematic diagram showing a brake apparatus of the sixteenth embodiment.

While any of the first through fifteenth embodiments is in the in-line type, the sixteenth embodiment is in the out-line type in which hydraulic fluid is sucked up from a reservoir by a pump and the pressure of hydraulic fluid discharged by the pump (pump discharge pressure) is introduced into a control pressure chamber 40.

As shown in Fig. 17 and Fig. 18, a master cylinder 1 of the sixteenth embodiment comprises a pressure intensifying control section 147 for outputting fluid pressure adjusted depending on the operating force of a brake operational member such as the pedal force on a brake pedal (not shown), and a master cylinder pressure developing section 148 for outputting MCY pressure intensified by the fluid pressure adjusted by the pressure intensifying control section 147. It should be noted that the brake system employing this master cylinder 1 of the sixteenth embodiment also includes a regenerative brake coordination system as an additional brake system (not shown) integrated therein.

In the sixteenth embodiment, a housing 2 of the master cylinder 1 has a stepped bore therein of which front end is closed and which is composed of a first bore 149 opening the right end of the housing 2, a second bore 150 formed successively from the left end of the first bore 149 and having a diameter smaller than that of the first bore 149, and a third bore 151 formed successively from the left end of the second bore 150 and having a diameter smaller than that of the second bore 150.

Fluid-tightly fitted in the second bore 150 of the stepped bore is a first cylindrical member 152 which extends through the first bore 149. Fluid-tightly fitted in the first bore 149 is a second cylindrical member 153 with a bottom 153b. The second cylindrical member 153 is formed with an external thread 153a to be engaged with an internal thread 2d formed in a rear end portion of the housing 2. By engaging the external thread 153a with the internal thread 2d, the second cylindrical member 153 is fixed not to move in the longitudinal direction. The first cylindrical member 152 is fitted between a step 2e, as a boundary between the second bore 150 and the third bore 151 of the housing 2, and the bottom 153b of the second cylindrical member 153 so that it is not allowed to move in the longitudinal direction.

Received in the first cylindrical member 152 is a cylindrical primary piston 154. The primary outer piston 154 is composed of a small-diameter portion 154a at a front portion thereof and a large-diameter portion 154b at a rear portion thereof. The small-diameter portion 154a is fluid-tightly and slidably received, via a first cup seal 15, in a bore of a third cylindrical member 155 fluid-tightly and slidably fitted in the bore of the first cylindrical member 152. The large-diameter portion 154b is fluid-tightly and slidably fitted in the bore of the first cylindrical member 152.

Further, fluid-tightly and fixedly fitted in the third bore 151 of the housing 2 is a fourth cylindrical member 156. Received in the bore of the fourth cylindrical member 156 and in the third bore 151 is a secondary piston 20. The secondary piston 20 is composed of a small-diameter portion 20b at a front portion thereof and a large-diameter portion 20a at a rear portion thereof. The small-diameter portion 20b is fluid-tightly and slidably fitted in the bore of the fourth cylindrical member 156 via a second cup seal 21 while the large-diameter portion 20a is fluid-tightly and slidably fitted in the third bore 151.

In the bore of the third cylindrical member 155, a first atmospheric pressure chamber 23 is formed between the front end of the primary piston 154 and the rear end of the secondary piston 20. The first atmospheric pressure chamber 23 is always in communication with a reservoir 135 through radial holes 157 formed in the third cylindrical member 155, an annular space 158 between the inner periphery of the first cylindrical member 152 and the outer periphery of the third cylindrical member 155, radial holes 159 formed in the first cylindrical member 152, and a passage 26 formed in the housing 2. In the bore of the fourth cylindrical member 156, a second atmospheric pressure chamber 28 is formed between the front end of the secondary piston 20 and the housing 2. The second atmospheric pressure chamber 28 is always in communication with the reservoir 135 through radial gaps 29 formed in the front end of the fourth cylindrical member 156, and a radial hole 30 formed in the housing 2.

In the bore of the first cylindrical member 152, a first MCY pressure chamber 32 is formed between the primary piston 154 and the third cylindrical member 155. The first MCY pressure chamber 32 is connected to wheel cylinders 60, 61 of a first brake circuit through radial holes 161 formed in the first cylindrical member 152 and a passage 34 formed in the housing 2. The third cylindrical member 155 has radial holes 35 which are always in communication with the first MCY pressure chamber 32. When the first cup seal 15 is positioned behind the radial holes 35 as illustrated, the radial holes 35 communicate with the first atmospheric pressure chamber 23 whereby the communication between the first MCY pressure chamber 32 and the first atmospheric pressure chamber 23 i.e. the reservoir 135 is allowed through the radial holes 35. On the other hand, when the first cup seal 15 is positioned ahead of the radial holes 35, the radial holes 35 are isolated from the first atmospheric pressure chamber 23, whereby the first MCY pressure chamber 32 is isolated from the first atmospheric pressure chamber 23 i.e. from the reservoir 135.

In the third bore 151 of the housing 2, a second MCY pressure chamber 37 is formed between the secondary piston 20 and the rear end of the fourth cylindrical member 156. The second MCY pressure chamber 37 is connected to wheel cylinders 80, 81 of a second brake circuit through a passage 38 formed in the housing 2. The fourth cylindrical member 156 has radial holes 39 formed in a rear end portion thereof which are always in communication with the second MCY pressure chamber 37. When the second cup seal 21 is positioned behind the radial holes 39 as illustrated, the radial holes 39 communicate with the second atmospheric pressure chamber 28, whereby the communication between the second MCY pressure chamber 37 and the second atmospheric pressure chamber 28 i.e. the reservoir 135 is allowed through the radial holes 39. On the other hand, when the second cup seal 21 is positioned ahead of the radial holes 39, the radial holes 39 are isolated from the second atmospheric pressure chamber 28, whereby the second MCY pressure chamber 37 is isolated from the second atmospheric pressure chamber 28 i.e. from the reservoir 135.

In the first atmospheric pressure chamber 23, a first return spring 17 is disposed in a compressed state between the primary piston 154 and the third cylindrical member 155. By the spring force of the first return spring 17, the primary piston 154 is always biased backwards and the third cylindrical member 155 is always biased forwards. In the second MCY pressure chamber 37, a second return spring 22 is disposed in a compressed state between the secondary piston 20 and the fourth cylindrical member 156. By the spring force of the second return spring 22, the secondary piston 20 is always biased backwards.

When the MCY 1 is inoperative, the rear end of the primary piston 154 is in contact with the second cylindrical member 153 as illustrated so that the primary piston 154 is in its rear-most position. In this state, the first cup seal 15 is positioned behind the radial holes 35 so that the first MCY pressure chamber 32 is in communication with the reservoir 135 through the first atmospheric pressure chamber 23. In addition, the rear end of the secondary piston 20 is in contact with the front end of the first cylindrical member 152 as illustrated so that the secondary piston 20 is also in its rear-most position. In this state, the second cup seal 21 is positioned behind the radial holes 39 so that the second MCY pressure chamber 37 is in communication with the reservoir 135 through the second atmospheric pressure chamber 28.

The front end of the third cylindrical member 155 is always in contact with the rear end of the secondary piston 20 by the spring force of the first return spring 17, whereby the third cylindrical member 155 and the secondary piston 20 move together in the longitudinal direction.

In the bore of the first cylindrical member 152, a control pressure chamber 40 is formed between the rear end of the primary piston 154 and the second cylindrical member 153. The control pressure chamber 40 is always in communication with a control pressure inlet 44 formed in the housing 2 through radial holes 162 formed in the first cylindrical member 152, an annular passage 163 formed between the outer periphery of a rear end portion of the first cylindrical member 152 and the inner periphery of a front end portion of the second cylindrical member 153, an annular passage 164 composed of a space formed between a step 2f of the housing 2 as a boundary between the first bore 149 and the second bore 150 and the front end of the cylindrical member 153.

An input shaft 112 is fluid-tightly and slidably inserted through the second cylindrical member 153 to project into the control pressure chamber 40. The input shaft 112 receives output from a brake pressure intensifying device such as a vacuum booster of a conventionally known type and this brake pressure intensifying device is manipulated by a brake pedal (not shown) as well known. Screwed into and fixed to the front end of the input shaft 112 is an extension shaft portion 165 such that the extension shaft portion 165 moves integrally with the input shaft 112. The extension shaft portion 165 extends inside the primary piston 154 and has a flange portion 165a formed at its front end. A nut member 166 is screwed into and fixed to a rear end portion of the primary piston 154. Disposed in a compressed state between the flange portion 165a and the nut member 166 is a travel control spring 167. In the inoperative state, the front end of the extension shaft portion 165 is in contact with the primary piston 154 by the spring force of the travel control spring 167 as illustrated.

As shown in Fig. 18, the control pressure inlet 44 is always connected with a discharge side of a pump 45. Therefore, the discharge side of the pump 45 is always connected to the control pressure chamber 40. The control pressure inlet 44 and the reservoir 135 are connected via a bypass line 168 bypassing the pump 75, besides a line provided with the pump 75. In the bypass line 169, a pressure control valve 169 as a braking force controller is provided. The pressure control valve 169 has a communication position where allows the communication between the control pressure inlet 44 and the reservoir 135 when the master cylinder 1 is inoperative (when the brake pedal is not depressed) and a fluid pressure control position where controls the fluid pressure of the control pressure chamber 40 (the pump-discharge pressure) when the master cylinder 1 is operative (when the brake pedal is depressed). Thus, the master cylinder 1 of the sixteenth embodiment is adapted to be in the out-line type in which the primary piston 154 is operated by the pump discharge pressure supplied into the control pressure chamber 40 after adjusted by the pressure control valve 169 and then outputs MCY pressure.

A pedal travel simulator as a pedal travel modulating device is structured in which the travel of the input shaft 112 is shortened such that the pump discharge pressure in the control pressure chamber 40, the spring force of the travel control spring 167, and the input of the input shaft 112 are balanced when the master cylinder 1 is operative.

Description will now be made as regard to the operation of the pressure control valve 169 in the fluid pressure control position. In the service braking mode (braking is applied only by the master cylinder 1 without application of the regenerative braking; hereinafter, this state will be referred to as "service braking mode"), the pressure control valve 169 controls the fluid pressure in the control pressure chamber 40 in response to the pedal force and the pedal travel. In the regenerative brake coordination mode (braking is applied both by the regenerative braking and the master cylinder 1; hereinafter, this state will referred to as "regenerative brake coordination mode), the pressure control valve 169 controls the fluid pressure in the control pressure chamber 40 in response to the pedal force and the pedal travel in such a manner that the braking force generated by MCY pressure developed by the fluid pressure of the control pressure chamber 40 becomes smaller than the braking force, corresponding to the pedal force and the pedal travel, generated in the service braking mode by an amount corresponding to the braking force generated by the regenerative braking. In this case, the pressure control valve 169 is controlled by a controller (not shown) based on information of pedal force or pedal travel detected by suitable detecting means and information of the operation of the regenerative braking.

As an example of method of reducing the braking force generated by MCY pressure during operation in the regenerative brake coordination mode, the threshold for shifting the pressure control valve 169 into the fluid pressure control position is changed to delay the shifting timing than in the service braking mode. Of cause, this is not limitative and any method that can reduce the braking force generated by MCY pressure during operation in the regenerative brake coordination mode can be employed.

The controller stops the pump 75 when receives no information of manipulation for braking such as pedal force or pedal travel and energizes the pump 75 when receives the information.

Equilibrium-of-force expressions for the input shaft 112 during the operation of the master cylinder 1 are as follows.

In the following expressions, these terms will be utilized:

W : input applied to the input shaft 112;
$P_p$ : fluid pressure of the control pressure chamber 40 (pump discharge pressure);
$A_1$ : effective pressure receiving area of the input shaft 112 where receives the pump discharge pressure $P_p$;
$S_1$ : setting load of the travel control spring 167;
$K_1$ : spring constant of the travel control spring 167;
L : relative movement between the primary piston 154 and the input shaft 112; and
$f_1$ : frictional force of the input shaft 112.

The equilibrium-of-force expression of the input shaft 112 is:

$$W = P_p \cdot A_1 - (S_1 + K_1 \cdot L) + f_1 \qquad \text{Expression (15)}$$

from Expression (15), the following expressions are established:

$$L = (P_p \cdot A_1 - W - S_1 + f_1)/K_1 \qquad \text{Expression (16)}$$

$$P_p = (W + S_1 + K_1 \cdot L - f_1)/A_1 \qquad \text{Expression (17)}$$

As apparent from Expression (16), the relative movement L increases in response to increase in the pump discharge pressure $P_p$ so that the travel $S_i$ of the input shaft 112 is reduced relative to the travel $S_t$ of the primary piston 154 according to the pump discharge pressure $P_p$ (by an amount corresponding to the relative movement L depending on the pump discharge pressure). Since the pump discharge pressure $P_p$ depends on the MCY pressure $P_m$ of the first MCY pressure chamber 32, the travel S; of the input shaft 112 is shortened relative to the travel $S_t$ of the primary piston 154 according to the MCY pressure $P_m$. The greater the MCY pressure $P_m$, the greater the relative movement L so that the greater the MCY pressure $P_m$, the greater the rate of shortening the travel $S_i$ of the input shaft 112.

Therefore, the control of the pedal travel in the service braking mode and the regenerative brake coordination mode is as follows.

In the service braking mode where the regenerative brake coordination is not conducted, greater MCY pressure $P_m$ is obtained, that is, greater travel $S_t$ of the primary piston 154 is obtained corresponding to the value of the MCY pressure $P_m$. Because of greater MCY pressure $P_m$, the ratio of shortening the travel $S_i$ of the input shaft 112 is greater. In this case, the travel of the input shaft 112 is effectively shortened even with greater travel $S_t$ of the primary piston 154. Because the travel of the output shaft of the brake pressure intensifying device i.e. the pedal travel of the brake pedal is proportional to the travel $S_i$ of the input shaft 112, the pedal travel is effectively shortened in the service braking mode.

In the regenerative brake coordination mode, the MCY pressure $P_p$ is controlled to be reduced in such a manner as to reduce the braking force generated by the MCY pressure by an amount corresponding to the braking force generated by the regenerative brake system. Accordingly, the ratio of shortening the travel $S_i$ of the input shaft 112 decreases. However, since the travel $S_t$ of the primary piston 154 is reduced because of smaller MCY pressure $P_m$, as a result, the travel $S_i$ of the input shaft 112 should be substantially equal to the travel $S_i$ in the service braking mode mentioned above. That is, the pedal travel in the regenerative brake coordination mode remains substantially the same as in the service braking mode.

In this manner, there is little change in the pedal travel between the service braking mode and the regenerative brake coordination mode. This means that the pedal travel remains substantially the same.

**EP 1 149 747 A1**

An equilibrium-of-force expression for the primary piston 154 during the operation of the master cylinder 1 is as follows:

In the following expression, these terms will be utilized:

$P_m$ : MCY pressure of the first MCY pressure chamber 32;
$A_2$ : effective pressure receiving area of the primary piston 154 where receives the pump discharge pressure $P_p$;
$A_3$ : effective pressure receiving area of the primary piston 154 where receives the MCY pressure $P_m$;
$S_1$ : setting load of the travel control spring 167;
$F_s$ : spring force of the first return spring 17 of the primary piston 154; and
$F_2$ : frictional force of the primary piston 154.

Equilibrium-of-force expression of the primary piston 154:

$$P_m \cdot A_3 = W + P_p (A_2 - A_1) - F_s - f_1 - f_2 \qquad \text{Expression (18)}$$

As apparent from the Expression (18), the MCY pressure $P_m$ is greater than the fluid pressure generated by the input W by an amount of the pump discharge pressure $P_p$. That is, the MCY pressure $P_m$ is intensified. Since the input W of the input shaft 112 is proportional to the pedal force, as a result, MCY pressure $P_m$ greater than the fluid pressure generated by the pedal force is obtained (in detail, to a magnitude of the sum of the pump discharge pressure $P_p$ and the amount intensified by the brake pressure intensifying device).

In the service braking mode, the pump discharge pressure $P_p$ is set to be greater. The MCY pressure $P_m$ is greater than the fluid pressure generated by the input W of the input shaft 112 because the MCY pressure $P_m$ is intensified by the greater pump discharge pressure $P_p$. By this intensifying action of the master cylinder 1, MCY pressure $P_m$ increased relative to the pedal force at a greater ratio is developed.

In the regenerative brake coordination mode, the pump discharge pressure $P_p$ is set to be smaller. The MCY pressure $P_m$ is smaller than that in the service braking mode because the MCY pressure $P_m$ is intensified by this smaller pump discharge pressure $P_p$. This means that the MCY pressure $P_m$ can be reduced without changing the input W of the input shaft 112 i.e. the pedal force. Therefore, the braking force can be reduced by an amount corresponding to the braking force generated by the regenerative brake system.

Hereinafter, description will be made as regard to the action of the master cylinder 1 of the sixteenth embodiment having the aforementioned structure.

When the brake pedal is not depressed where the master cylinder 1 is not actuated, the brake pressure intensifying device is in the inoperative state and the primary piston 154, the secondary piston 20, and the input shaft 112 are all in their rear-most positions as illustrated. In addition, the pressure control valve 169 is set in the communication position. In this state, the pump 75 is stopped.

As the brake pedal is depressed for service braking, the pedal force or pedal travel is detected and is inputted into the controller. Then, the controller energizes the pump 75 and shifts the pressure control valve 169 into the fluid pressure control position. Therefore, the pump 75 discharges hydraulic fluid to the control pressure chamber 40 so as to increase the fluid pressure of the control pressure chamber 40 (the pump discharge pressure). The pump discharge pressure is controlled by the pressure control valve 169. At this point, the controller set the pressure control valve 169 to increase or reduce the fluid pressure in proportion to the pedal force or pedal travel so as to obtain pump discharge pressure proportional to the pedal force or pedal travel. Since the regenerative braking is not applied, the controller controls the pressure control valve 169 to obtain relatively great pump discharge pressure.

The depression of the brake pedal also actuates the brake pressure intensifying device to intensify the pedal force to output increased force. The output of the brake pressure intensifying device is applied to the input shaft 112 of the master cylinder 1.

As the pump discharge pressure proportional to the pedal force or pedal travel is supplied to the control pressure chamber 40, the primary piston 154 moves forwards by the fluid pressure in the control pressure chamber 40. According to the forward movement of the primary piston 154, the first cup seal 15 attached to the front end portion of the primary piston 154 moves to a position ahead of the radial holes 35 by passing the radial holes 35. As a result of this, the first MCY pressure chamber 32 is isolated from the first atmospheric pressure chamber 23. By further forward movement of the primary piston 154, MCY pressure is developed in the first MCY pressure chamber 32.

The MCY pressure in the first MCY pressure chamber 32 advances the secondary piston 20 in the forward direction. According to the forward movement of the secondary piston 20, the second cup seal 21 attached to the front end portion of the secondary piston 20 moves to a position ahead of the radial holes 39 by passing the radial holes 39. As a result of this, the second MCY pressure chamber 37 is isolated from the second atmospheric pressure chamber 28. By further forward movement of the secondary piston 20, MCY pressure is developed in the second MCY pressure chamber 37. The MCY pressure in the first and second MCY pressure chambers 32, 37 is proportional to the pedal force or the pedal travel.

The MCY pressure is supplied to the respective wheel cylinders 60, 61; 80, 81 of the two brake circuits through passages 34, 38 so as to actuate the wheel cylinders 60, 61; 80, 81, thereby applying service braking. The master cylinder 1 is set such that there is no differential between the MCY pressure in the first MCY pressure chamber 32 and the MCY pressure in the second pressure chamber 37. Therefore, the braking force is equal between the two brake circuits. Since the MCY pressure is proportional to the pedal force or pedal travel, the generated braking force is also proportional to the pedal force or pedal travel.

On the other hand, the fluid pressure of the control pressure chamber 40 acts on the input shaft 112 against the input of the input shaft 112 so that the input is balanced with the force applied to the input shaft by the pump discharge pressure and the force applied to the input shaft by the travel control spring 167. That is, the resultant force of the force applied to the input shaft by the pump discharge pressure and the force applied to the input shaft by the travel control spring 167 acts as reaction force to the input shaft 112. This reaction force is further transmitted to the brake pedal through the brake pressure intensifying device whereby the driver feels the reaction force.

In the service braking mode, the pressure control is achieved to obtain greater pump discharge pressure so as to obtain greater travel of the primary piston 154. However, the travel of the input shaft 112 i.e. the pedal travel is shortened at a greater ratio.

As depression on the brake pedal is released, the pressure control valve 169 becomes in the inoperative state so that it is shifted to the communication position and the pump 75 is stopped. In addition, the brake pressure intensifying device becomes in the inoperative state so that the input shaft moves backwards. Accordingly, the hydraulic fluid in the braking force control pressure chamber 40 is discharged to the reservoir 135 so as to reduce the fluid pressure of the braking force control pressure chamber 40. Thus, the primary piston 154 moves backwards by the spring force of the first return spring 17 and the MCY pressure of the first MCY pressure chamber 32. This backward movement reduces the MCY pressure of the first MCY pressure chamber 32. Thus, the secondary piston 20 moves backwards by the spring force of the second return spring 22 and the MCY pressure of the second MCY pressure chamber 37. This backward movement reduces the MCY pressure of the second MCY pressure chamber 37.

As the first cup seal 15 moves to a position behind the radial holes 35 according to the backward movement of the primary piston 154, the first MCY pressure chamber 32 communicates with the first atmospheric pressure chamber 23. On the other hand, as the second cup seal 21 moves to a position behind the radial holes 39 according to the backward movement of the secondary piston 20, the second MCY pressure chamber 37 communicates with the second atmospheric pressure chamber 28. The MCY pressure both in the first and second MCY pressure chambers 32, 37 is discharged to the reservoir 135. As the primary piston 154, the secondary piston 20, and the input shaft 112 reach in their respective rear-most positions, the first and second MCY pressure chambers 32, 37 and the control pressure chamber 40 are all at the atmospheric pressure so that the master cylinder 1 is inoperative, thereby canceling the braking.

On the other hand, in the regenerative brake coordination mode, the controller controls the pressure control valve 169 to obtain pump discharge pressure which is smaller than that in service braking mode by an amount corresponding to the braking force generated by the regenerative braking. Accordingly, the MCY pressure developed in the regenerative brake coordination mode is also smaller than that in the service braking mode by an amount corresponding to the braking force generated by the regenerative braking. That is, the braking force generated by the respective wheel cylinders 60, 61; 80, 81 is thus smaller. The resultant braking force as a whole in the regenerative braking mode should be substantially equal to the braking force in the service braking mode because the resultant braking force is the total of the braking force generated by the regenerative brake system and the braking force generated by MCY pressure. Since the MCY pressure is reduced without changing the input of the input shaft 112 as mentioned above, the braking force is reduced without changing the pedal force. The pedal travel in this regenerative brake coordination mode can remain substantially the same as in the service braking mode as mentioned above.

As apparent from the above, also in the master cylinder 1 of the sixteenth embodiment, the pedal force versus MCY pressure characteristic in the service braking mode is represented by the solid line in Fig. 16(a). On the other hand, the pedal force versus MCY pressure characteristic in the regenerative brake coordination mode is represented by the dotted line in Fig. 16(a) in the case that the shifting timing of the pressure control valve 169 is delayed to develop smaller MCY pressure $P_m$.

Therefore, the total braking force versus pedal force (the pedal force is indicated in Fig. 16(c)) is represented by the solid line in Fig. 16(b).

In the master cylinder 1 of the sixteenth embodiment, the pedal force versus pedal travel characteristic in the service braking mode is represented by a relatively gentle curve as indicated by the solid line in Fig. 16(d), while the pedal force versus pedal travel characteristic in the regenerative brake coordination mode is represented by a relatively gentle curve as indicated by the dotted line in Fig. 16(d) that is similar to that in the service braking mode, just like the aforementioned fifteenth embodiment. There is little change in the pedal force versus pedal travel characteristic be-

EP 1 149 747 A1

tween the service braking mode and the regenerative brake coordination mode. This means that the pedal force versus pedal travel characteristic remains substantially the same.

In the event of failure of the brake pressure intensifying device, the brake pressure intensifying device does not output. However, since the pump discharge pressure is introduced into the control pressure chamber 40 to move the primary piston 154, the master cylinder 1 can output MCY pressure intensified by the pump discharged pressure, thereby actuating wheel brakes with force intensified by the pump discharge pressure. In the event of failure of the pump 75, the pump 75 does not output pump discharge pressure. However, since the brake pressure intensifying device outputs to move the primary piston 154, the master cylinder 1 can output MCY pressure, thereby actuating the wheel brakes with force intensified by the brake pressure intensifying device.

In the event of failure of both the brake pressure intensifying device and the pump 75, both the brake pressure intensifying device and the pump 75 do not output. However, when the driver depresses the brake pedal strongly, the pedal force can be transmitted to the brake pressure intensifying device so as to move the input shaft 112 forwards without magnification as well known in the art. Then, the extension shaft portion 165 of the input shaft 112 directly presses the primary piston 154 to move the primary piston 154. Accordingly, the master cylinder 1 can output MCY pressure, thereby actuating wheel brakes with force generated manually only by the pedal force.

As discussed above, according to the structure of the master cylinder 1 of the sixteenth embodiment, in the regenerative braking mode, the fluid pressure of the control pressure chamber 40 is reduced by control of the pressure control valve 169, thereby reducing the braking force generated by MCY pressure by an amount of the braking force generated by the regenerative braking. In the service braking mode, the fluid pressure of the control pressure chamber 40 is raised by control of the pressure control valve 169, thereby providing greater braking force generated by MCY pressure.

Whenever the braking force generated by the MCY pressure is varied between the regenerative brake coordination mode and the service braking mode, the brake system can provide substantially the same pedal travel characteristic both in the service braking mode and the regenerative brake coordination mode because the travel is modulated in the service braking mode and in the regenerative brake coordination mode.

The braking force generated by the MCY pressure can be controlled according to the operational mode such as the regenerative brake coordination mode with substantially the same pedal force and substantially the same pedal travel.

In addition, the rate of shortening the pedal travel is controlled according to the travel of the primary piston 154 or the value of the MCY pressure, that is, based on the travel of the primary piston 154 or the value of the MCY pressure, whereby the pedal travel can be shortened relative to the conventional one without affecting the pedal feel. The brake system can provide good pedal feel.

Since the MCY pressure is intensified by pump discharge pressure capable of providing easy pressure control, the braking force can be easily and minutely controlled as compared to a conventional brake system with only a conventional braking intensifying device.

Even in case of failure of the brake pressure intensifying device, the MCY pressure can be intensified by the pump discharge pressure, thereby securely actuating the wheel brakes with increased force. Even in case of failure of the pump 75, the MCY pressure can be intensified by the brake pressure intensifying device, thereby securely actuating the wheel brakes. In case of failure of both the brake pressure intensifying device and the pump 75, the pedal force can be directly transmitted to the primary piston 154 without magnification. Accordingly, even in the event of such failure of pressure source, the brake system can securely actuate the wheel brakes.

Besides the vacuum booster 85 and the hydraulic booster 109, any other brake pressure intensifying device can be employed as the brake pressure intensifying device. As for the brake system, any other brake system can be employed besides the system of the fourth embodiment.

Though the master cylinder piston is composed of two components: the primary piston and the secondary piston in any of the aforementioned embodiments, any master cylinder piston which is controlled by wheel cylinder pressure in the regenerative brake coordination mode or in the brake assist control mode such that the travel of the piston remains substantially the same as that in the service braking mode can be employed as the master cylinder piston of the present invention.

Though the master cylinder is of a tandem type in any of the aforementioned embodiments, a master cylinder of a single type in which one master cylinder piston is used may be employed as the master cylinder of the present invention.

The MCY of the present invention may be applied to other brake apparatus such as an engine brake system besides the brake system as mentioned above.

As apparent from the above description, in the master cylinder of the present invention, the travel of the master cylinder piston is modulated or compensated, when the wheel cylinder pressure is varied, by the pedal travel modulating device of which operation is controlled by the wheel cylinder pressure. Therefore, whenever the wheel cylinder pressure is varied according to operation mode such as the service braking mode, the regenerative brake coordination mode,

31

or the brake assist control mode, the travel of the master cylinder piston can remain the same as that in the service braking mode.

According to the aspect of claims 4 through 10, the brake system can not only modulate or compensate the travel of the master cylinder piston to remain the same as that in the service braking mode when the wheel cylinder pressure is varied, but also control the input applied to the master cylinder piston to remain the same even when the wheel cylinder pressure is varied. Therefore, the master cylinder according to claim 4 can be suitably applied for various brake operational modes.

According to the aspect of claims 7 through 12, the pedal travel modulating device is positioned out of the central axis of the primary piston of the master cylinder, thereby simplifying the construction of such master cylinder and pedal travel modulating device, improving the assembly work, and reducing the cost involved. The simplified construction leads to decrease in number of portions producing frictional force of the pedal travel modulating device, thus improving the accuracy of travel control of the pedal travel modulating device.

According to the aspect of claim 13, in the event of failure of the pump, the master cylinder pressure is introduced directly to the wheel cylinders, thereby securely actuating the wheel brakes with the master cylinder pressure.

According to the aspect of claim 14, the servo ratio of the brake pressure intensifying device can be set to be smaller than the normal servo ratio for service braking. Therefore, the brake system of the present invention can employ a brake pressure intensifying device of reduced size.

According to the aspect of claim 15, in the event of failure of pressure source of the brake pressure intensifying device, the operating force of the brake operational member can be directly transmitted to the master cylinder piston without magnification to operate the master cylinder piston. Accordingly, even in the event of such failure of pressure source, the brake system can securely develop master cylinder pressure in the master cylinder pressure chamber.

**Claims**

1. A brake apparatus comprising:

   a master cylinder having an input shaft which travels according to travel of an operational member for braking maneuver, a master cylinder pressure chamber, and a master cylinder piston which develops master cylinder pressure in said master cylinder pressure chamber according to the travel of said input shaft,
   a pump which is driven in braking maneuver,
   a braking force control device which controls, in braking maneuver, the discharge pressure of said pump according to at least either the operational condition for service braking or the operational condition for another braking different from the service braking, and
   a travel modulating device which modulates the travel of the operational member in braking maneuver by using the discharge pressure of the pump controlled by said braking force control device.

2. A brake apparatus as claimed in claim 1, wherein said travel modulating device controls the travel of said master cylinder piston by using the discharge pressure of the pump controlled by said braking force control device.

3. A brake apparatus as claimed in claim 1 or 2, wherein said pump discharges the discharge pressure by using hydraulic fluid of said master cylinder pressure chamber and the discharge pressure of the pump controlled by said braking force control device is discharged to wheel cylinders as wheel cylinder pressure.

4. A brake apparatus as claimed in any one of claims 1 through 3, wherein said travel modulating device is provided in said master cylinder coaxially with said master cylinder piston.

5. A breaking apparatus as claimed in any one of claims 2 through 4, wherein said master cylinder piston comprises a first piston which travels when receives the input, and a second piston which is fluid-tightly and slidably disposed relative to said first piston, wherein said second piston is moved relative to said first piston by applying said wheel cylinder pressure to said second piston, thereby controlling the travel of said first piston.

6. A brake apparatus as claimed in claim 5, wherein said second piston is formed in a cylindrical shape having an outer peripheral step, and is fluid-tightly and slidably fitted in an axial bore of a housing of the master cylinder or in a bore of a cylindrical member fixed to said housing, and said first piston is fluid-tightly and slidably fitted in said second piston, said brake apparatus further comprising a control pressure chamber into which said wheel cylinder pressure is introduced and which is formed between the outer periphery of said second piston and the inner periphery of the axial bore of said housing or the inner periphery of a bore of said cylindrical member and is defined by the outer peripheral step of said second piston, wherein said wheel cylinder pressure introduced into said control pressure chamber acts on said outer peripheral step of said second piston, thereby controlling the travel of said first piston.

7. A brake apparatus as claimed in claim 5, wherein said second piston is formed in a cylindrical shape having an inner peripheral step, and said first piston is fluid-tightly and slidably fitted in an axial bore of said second piston, said brake apparatus further comprising a control pressure chamber into which said wheel cylinder pressure is introduced and which is formed between the inner periphery of said second piston and the outer periphery of said first piston and is defined by the inner peripheral step of said second piston, wherein said wheel cylinder pressure introduced into said control pressure chamber acts on said inner peripheral step of said second piston, thereby controlling the travel of said first piston.

8. An apparatus as claimed in claim 4, 5, 6 or 7, wherein said input shaft, which is moved by the input according to the travel of the operational member, is movable relative to said master cylinder piston, said brake apparatus further comprising a control spring which is disposed in a compressed state between said input shaft and said master cylinder piston for controlling the travel of said input shaft, wherein said input of said input shaft and the spring force of said control spring act in the same direction, said wheel cylinder pressure acts on said input shaft against said input and the spring force of said control spring, and said wheel cylinder pressure is controlled such that the force produced by said wheel cylinder pressure, said input, and the spring force of said control spring are balanced.

9. A brake apparatus as claimed in any one of claims 1 through 3, wherein said travel modulating device is located out of the central axis of said master cylinder piston.

10. A brake apparatus as claimed in claim 9, wherein said operational travel modulating device has a travel modulating piston for controlling the travel of said master cylinder piston, said travel modulating piston is moved by applying said master cylinder pressure to said travel modulating piston in one direction and applying said wheel cylinder pressure to said travel modulating piston in a direction opposite to said one direction, thereby controlling the travel of said master cylinder piston.

11. A brake apparatus as claimed in claim 10, wherein said travel modulating piston is composed of a large-diameter piston portion at its one side portion and a small-diameter piston portion at it's the other side portion, said master cylinder pressure acts on said large-diameter piston portion and said wheel cylinder pressure acts on said small-diameter piston portion.

12. A brake apparatus as claimed in claim 10, wherein said travel modulating piston is composed of a large-diameter piston portion at its one side portion and a small-diameter piston portion at it's the other side portion, said master cylinder pressure acts on said large-diameter piston portion and said wheel cylinder pressure acts on a step between said large-diameter piston portion and said small-diameter piston portion.

13. A brake apparatus as claimed in any one of claims 10 through 12, further comprising a biasing means for biasing said travel modulating piston in a direction opposite to the action of said master cylinder pressure, wherein said wheel cylinder pressure is controlled such that the force produced by said master cylinder pressure, the force produced by said wheel cylinder pressure, and the biasing force of said biasing means are balanced.

14. A brake apparatus as claimed in any one of claims 11 through 13, wherein said large-diameter piston portion is sealed by metal seal and said small-diameter piston portion is sealed by at least either metal seal or elastic seal.

15. A brake apparatus as claimed in any one of claims 1 through 14, wherein in the event of failure of said pump, said master cylinder pressure is supplied to said wheel cylinders.

16. A brake apparatus as claimed in any one of claims 1 through 15, wherein the input is applied to said master cylinder piston after intensified by a brake pressure intensifying device at a preset servo ratio by using pressure of a pressure source, and said servo ratio is set smaller than the servo ratio normally used for service braking.

17. A brake apparatus as claimed in claim 16, wherein in the event of failure of said pressure source, the force applied to said operational member is transmitted through said brake pressure intensifying device without magnification.

**18.** An apparatus as claimed in any one of claims 1 to 17, wherein said travel modulating device controls the travel of said input shaft according to the discharge pressure of the pump controlled by said braking force control device.

**19.** A brake apparatus as claimed in claim 18, wherein said travel modulating device has a travel control spring disposed between said master cylinder piston and said input shaft, and said travel modulating device shortens the travel of said input shaft such that the discharge pressure of the pump controlled by a pressure control valve, the spring force of said travel control spring, and said input are balanced.

**20.** A brake apparatus as claimed in claim 18 or 19, wherein said braking force control device controls such that the discharge pressure of said pump is greater when another braking different from said service braking is not conducted, and the discharge pressure of said pump is smaller when said another braking is conducted.

**21.** A brake apparatus as claimed in any one of claims 18 through 20, wherein said master cylinder piston is operated with the discharge pressure of said pump controlled by said braking force control device, and wheel brakes are actuated with master cylinder pressure developed by this operation of said master cylinder piston.

**22.** A brake apparatus as claimed in any one of claims 18 through 20, wherein wheel brakes are actuated with the discharge pressure of the pump controlled by said braking force control device.

**23.** A brake apparatus as claimed in any one of claims 1 through 22, wherein said another braking is a regenerative braking.

# F I G . 1

EP 1 149 747 A1

# FIG.2

EP 1 149 747 A1

FIG.3

# FIG.4

# FIG.5

WCY PRESSURE

SERVICE (NORMAL)BRAKING

WITH REGENERATIVE BRAKING

PUMP FAILURE

INPUT

TRAVEL OF INNER PISTON

Approximation of pedal travel characteristic
between the service braking and
the regenerative braking is achieved.

PUMP FAILURE

SERVICE (NORMAL)BRAKING

WITH REGENERATIVE BRAKING

F I G . 6

# F I G . 7

# FIG.8

EP 1 149 747 A1

# FIG.9

# FIG. 10

(a)

TO RESERVOIR 135

(b)

TO RESERVOIR 135

(c)

TO RESERVOIR 135

# F I G . 1 1

TO RESERVOIR
135

# F I G . 1 2

TO RESERVOIR 135

F I G . 1 3

F I G . 1 4

FIG.15

EP 1 149 747 A1

# FIG.16

(a)

MCY PRESSURE

(Pm)

SERVICE BRAKING MODE

REGENERATIVE BRAKE
COORDINATION MODE

CHARACTERISTICS OF BRAKE PRESSURE
INTENSIFYING DEVICE

PEDAL FORCE

(b)

BRAKING FORCE

REGENERATIVE BRAKING FORCE

BRAKING FORCE GENERATED BY PUMP
DISCHARGE PRESSURE

BRAKING FORCE
GENERATED BY BRAI
PRESSURE INTENSIFYIN
DEVICE

TIME

(c)

PEDAL FORCE

TIME

(d)

PEDAL TRAVEL

SERVICE BRAKING MODE

REGENERATIVE BRAKE
COORDINATION MODE

CHARACTERISTICS OF BRAKE
PRESSURE INTENSIFYING DEVICE

PEDAL FORCE

F I G. 1 7

EP 1 149 747 A1

F I G . 1 8

51

EP 1 149 747 A1

| | European Patent Office | EUROPEAN SEARCH REPORT | Application Number EP 01 10 9755 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | FR 2 772 709 A (JIDOSHA KIKI CO) 25 June 1999 (1999-06-25) * figures 13,18,27 * * page 39, line 17 - page 63, line 28 * * page 73, line 8 - page 74, line 6 * | 1-5,9, 15,18-22 | B60T7/04 B60T7/12 B60T8/00 B60T8/32 B60T8/40 B60T8/44 B60T13/16 |
| A | | 6-8 | |
| X | GB 2 267 543 A (LUCAS IND PLC) 8 December 1993 (1993-12-08) * figures * * column 13, paragraph 2 - column 14, paragraph 4 * | 1,2,4,5, 8,9, 15-23 | |
| X | US 5 044 700 A (WILLMANN KARL-HEINZ) 3 September 1991 (1991-09-03) * figure * * column 1, line 27 - column 1, line 58 * * column 4, line 25 - column 4, line 66 * | 1,2,4,5, 9,15-18, 21 | |
| X | US 5 188 440 A (FAULHABER ANDREAS ET AL) 23 February 1993 (1993-02-23) * column 2, line 13 - column 2, line 37 * | 1,2,18, 20-22 | TECHNICAL FIELDS SEARCHED (Int.Cl.7) B60T |
| X | PATENT ABSTRACTS OF JAPAN vol. 1996, no. 02, 29 February 1996 (1996-02-29) & JP 07 277167 A (SUMITOMO ELECTRIC IND LTD), 24 October 1995 (1995-10-24) * abstract * | 1,2,4,5, 9,15,18, 21,22 | |
| P,X | EP 1 081 005 A (DENSO CORP) 7 March 2001 (2001-03-07) * figures 9,14,16 * | 1-5,8,9, 15-21,23 | |

-/--

The present search report has been drawn up for all claims

| Place of search | Date of completion of the search | Examiner |
|---|---|---|
| MUNICH | 27 July 2001 | Marx, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

52

European Patent Office

**Application Number**

EP 01 10 9755

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 655 429 A (CORDS FREDERICK W ET AL) 12 August 1997 (1997-08-12) * figures * | 1-23 | |

TECHNICAL FIELDS SEARCHED (Int.Cl.7)

The present search report has been drawn up for all claims

| Place of search | Date of completion of the search | Examiner |
|---|---|---|
| MUNICH | 27 July 2001 | Marx, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 149 747 A1

ANNEX TO THE EUROPEAN SEARCH REPORT
ON EUROPEAN PATENT APPLICATION NO.

EP 01 10 9755

This annex lists the patent family members relating to the patent documents cited in the above-mentioned European search report.
The members are as contained in the European Patent Office EDP file on
The European Patent Office is in no way liable for these particulars which are merely given for the purpose of information.

27-07-2001

| Patent document cited in search report | | Publication date | Patent family member(s) | | Publication date |
|---|---|---|---|---|---|
| FR 2772709 | A | 25-06-1999 | JP | 11265922 A | 28-09-1999 |
| | | | JP | 11240441 A | 07-09-1999 |
| | | | JP | 11255103 A | 21-09-1999 |
| | | | JP | 11255102 A | 21-09-1999 |
| GB 2267543 | A | 08-12-1993 | NONE | | |
| US 5044700 | A | 03-09-1991 | DE | 3925649 A | 07-02-1991 |
| | | | EP | 0411320 A | 06-02-1991 |
| | | | HU | 58237 A | 28-02-1992 |
| | | | JP | 3070661 A | 26-03-1991 |
| US 5188440 | A | 23-02-1993 | DE | 4022407 C | 28-11-1991 |
| | | | DE | 59100881 D | 03-03-1994 |
| | | | EP | 0465820 A | 15-01-1992 |
| | | | ES | 2050482 T | 16-05-1994 |
| | | | JP | 2563860 B | 18-12-1996 |
| | | | JP | 4232164 A | 20-08-1992 |
| JP 07277167 | A | 24-10-1995 | NONE | | |
| EP 1081005 | A | 07-03-2001 | NONE | | |
| US 5655429 | A | 12-08-1997 | WO | 9721036 A | 12-06-1997 |
| | | | US | 5735124 A | 07-04-1998 |

EPO FORM P0459

For more details about this annex : see Official Journal of the European Patent Office, No. 12/82